(19) Europäisches Patentamt
European Patent Office
Office européen des brevets

(11) Veröffentlichungsnummer : **0 079 536**
**B1**

(12) **EUROPÄISCHE PATENTSCHRIFT**

(45) Veröffentlichungstag der Patentschrift : **21.01.87**

(21) Anmeldenummer : **82110184.7**

(22) Anmeldetag : **05.11.82**

(51) Int. Cl.[4] : **C 08 G 18/10**, C 08 G 18/50, C 08 G 18/83, C 07 C125/06, C 07 C127/00

# (54) Verfahren zur Herstellung modifizierter Polyamine.

(30) Priorität : **12.11.81 DE 3144991**

(43) Veröffentlichungstag der Anmeldung : **25.05.83 Patentblatt 83/21**

(45) Bekanntmachung des Hinweises auf die Patenterteilung : **21.01.87 Patentblatt 87/04**

(84) Benannte Vertragsstaaten : **BE DE FR GB IT NL**

(56) Entgegenhaltungen :
**EP-A- 0 050 275**
**EP-A- 0 061 627**
**DE-A- 2 948 419**

(73) Patentinhaber : **BAYER AG**
**Konzernverwaltung RP Patentabteilung**
**D-5090 Leverkusen 1 Bayerwerk (DE)**

(72) Erfinder : **Rasshofer, Werner, Dr.**
**Wolfskaul 10**
**D-5000 Köln 80 (DE)**
Erfinder : **Dieterich, Dieter, Dr.**
**Ludwig-Girtler-Strasse 1**
**D-5090 Leverkusen 1 (DE)**

**EP 0 079 536 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein vereinfacht durchzuführendes Verfahren zur Herstellung von Urethan- und/oder Harnstoff- und/oder Thiourethangruppen und gegebenenfalls weitere Gruppen, vorzugsweise eine oder mehrere Alkylenethergruppen aufweisenden, neuartigen, modifizierten Polyaminen durch alkalische Hydrolyse von endständige aromatische und/oder aliphatische bzw. cycloaliphatische Isocyanatgruppen aufweisenden Verbindungen mit einem NCO-Gehalt von 0,5 bis 40 Gew.-% und Gewinnung der Polyamine aus der als Hydrolyseprodukt entstehenden, intermediären Carbamatstufe durch acidolytische und/oder thermische Carbamatzerlegung und/oder Lösungsmittelextraktion, wobei erfindungsgemäß die NCO-Hydrolyse zur Carbamatstufe in Gegenwart von Verbindungen vorgenommen wird, welche mindestens zwei gegenüber NCO-Gruppen reaktive H-Atome aufweisende Gruppen (« H-aktive Gruppen ») aus der Reihe Hydroxyl- und/oder Amino- und/oder Thiolgruppen aufweisen. Als Isocyanatgruppen aufweisende Verbindungen werden modifizierte Isocyanate oder NCO-Prepolymere bzw. Semiprepolymere eingesetzt. Die erhaltenen Polyamine lassen sich mit Vorteil als Ausgangskomponenten zur Herstellung von Polyurethanen verwenden.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel findet sich in der JP-PS 55 007-827.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4 000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen. Außerdem ist der Verlust des tert.-Carbinolanteiles unökonomisch.

Gegenstand der DE-B 1 694 152 ist die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO : NH-Verhältnis = 1 : 1,5 bis 1 : 5). Nicht-umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der US-PS 3 385 829 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure gemäß DE-B 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder gemäß US-PS 3 044 989 durch Umsetzung höhermolekularer Polyhydroxylverbindungen mit Acrylnitril unter anschließender katalytischer Hydrierung. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z. B. beschrieben in der US-PS 4 180 644 und der DE-A 2 019 432, 2 619 840, 2 648 774 und 2 648 825. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439). Nachteilig sind hier vor allem die hohen Kosten des Reduktionsschrittes.

Es ist auch bekannt, daß gewisse heteroaromatische Isocyansäureester durch basische Hydrolyse in heteroaromatische Amine überführt werden können. Die bei H. John, J. Prakt. Chemie *130*, 314 f bzw. 332 f (1931) für zwei ganz bestimmte, heteroaromatische Monoisocyansäureester genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

Gegenstand eines eigenen Vorschlags nach DE-A 2 948 419 war ein mehrstufiges Verfahren zur Herstellung von Polyaminen durch wäßrig-alkalische Hydrolyse von NCO-Voraddukten, gegebenenfalls in Gegenwart inerter Lösungsmittel mittels überschüssiger Basenmengen zu Carbamaten, Ansäuern mittels über die Basenmenge hinaus überschüssiger Mengen an Mineralsäuren unter Carbamatzersetzung,

Neutralisation überschüssiger Säuremengen mittels Basen und anschließende Isolierung der Polyamine durch Phasentrennung oder Extraktion.

In der nicht vor veröffentlichten eigenen deutschen Patentanmeldung P 30 39 600 (& EP-A-50 275) wurde auch eine alkalische Hydrolyse in Mischungen aus Wasser und monofunktionellen Alkoholen, sowie eine Aufarbeitung der Carbamate mit Ionenaustauscherharzen anstelle von Mineralsäuren beschrieben.

Obwohl diese neueren Verfahren in mehrfacher Hinsicht eine Verbesserung gegenüber dem Stand der Technik darstellen, ist eine weitere Verbesserung des Verfahrens wünschenswert, wobei auch neue Produkte mit verbesserten Eigenschaften durch Modifizierung der Diamine erhalten werden. Die Verbesserungen sind aus folgenden Gründen erwünscht:

1. So tritt, insbesondere bei einem NCO : $OH^{\ominus}$-Verhältnis von 1,01 : 1 bis 1,2 : 1 leicht die Bildung von Harnstoffen (über « $H_2O$-Verlängerung ») an die Stelle der Carbamatreaktion, so daß über Harnstoffgruppen vorverlängerte Produkte entstehen. Solche Harnstoffgruppen aufweisenden Polyamine sind für manche Anwendungszwecke zwar wertvoll, doch wird in den meisten Fällen aus Gründen der Verarbeitbarkeit ein harnstoffgruppenfreies Produkt bevorzugt.

2. NCO-Prepolymere und andere NCO-Verbindungen, wie sie z. B. durch Umsetzung von NCO-Verbindungen mit sich selbst (« Dimere » und « Trimere »), oder mit Harnstoffgruppen aufweisenden Polyisocyanaten (Biurete) etc., entstehen, weisen für gewöhnlich noch einen gewissen Anteil an monomerem Isocyanat auf, der bei den oben geschilderten Verfahren in monomeres Polyamin, wie z. B. Toluylendiamin umgewandelt wird. Für viele Anwendungszwecke ist aber aus physiologischen Gründen und auch aus Reaktivitätsgründen die weitgehende Abwesenheit von freien, niedermolekularen Aminen erwünscht oder sogar erforderlich. Dies kann dadurch erreicht werden, daß die niedermolekulare Polyisocyanate aufweisenden NCO-Verbindungen einer Destillation gegebenenfalls unter Anlegen von Vakuum, z. B. mittels eines sogenannten Dünnschichters, z. B. zur Entfernung der Diisocyanate, unterworfen werden. Dieser Destillationsschritt ist jedoch kostenintensiv.

Ein weiteres Mittel zur Erreichung von weitgehender Monomerenfreiheit ist die Hinzufügung von ein- oder mehrwertigen Hydroxylverbindungen, die nach der Herstellung des z. B. NCO-Prepolymeren erfolgt und so aber die Verweilzeit im Kessel verlängert und die Kosten erhöht.

3. Endständige Aminogruppen aufweisende Polyamine, wie sie Verfahrensprodukte der oben geschilderten Verfahren sind, werden bevorzugt in vielen Anwendungen im Gemisch mit anderen, endständigen Aminogruppen aufweisenden Polyaminen wie z. B. Aminopolyethern, eingesetzt. Solche Mischungen bestehen dann z. B. aus einem Aminopolyether des Molekulargewichtsbereichs von 2 000-4 000 und einem Aminopolyether des Molekulargewichtsbereichs 300-2 000.

Solche Mischungen lassen sich etwa dadurch herstellen, daß zwei oder mehrere solcher Polyamine miteinander vermischt werden. Dies setzt voraus, daß beide Polyamine miteinander misch- und lösbar sind, was jedoch nicht immer der Fall ist. Zudem ist es vergleichsweise unökonomisch, für die Herstellung einer Reaktionskomponente mehrmals die gleichen Verfahrensschritte durchzuführen.

Solche Polyamin-Gemische lassen sich auch dadurch herstellen, daß Gemische aus NCO-Prepolymeren gemäß dem obigen geschilderten Verfahren umgewandelt werden. Auch hier müssen zwei NCO-Prepolymere hergestellt werden und auch hier ist die Löslichkeit der oftmals fest-kristallinen NCO-Komponente des niederen MG-Bereichs problematisch.

Solche Polyamin-Gemische lassen sich auch dadurch herstellen, daß zu einem Semiprepolymer weitere NCO-reaktive Komponente gegeben wird, die mit dem überschüssigen, monomeren Polyisocyanat reagiert und das so erhaltene Prepolymergemisch gemäß dem obig geschilderten Verfahren umgesetzt wird. Nachteilig ist auch hier die Notwendigkeit eines zweiten Schritts und die zum Teil geringe Löslichkeit von niedermolekularen NCO-Prepolymeren in den höhermolekularen NCO-Prepolymeren.

Dieser etwaige kristalline Ausfall niedermolekularer NCO-Prepolymere kann vermieden werden, wenn zu einem höhermolekularen NCO-Prepolymer eine weitere NCO-reaktive Komponente zugegeben wird, so daß Kettenvorverlängerung eintritt. Abgesehen davon, daß wiederum ein zweiter Reaktionsschritt erforderlich ist, steigt die Viskosität des vorverlängerten NCO-Prepolymers. Dies ist für die Durchführung der oben geschilderten Verfahren, die eine möglichst niederviskose NCO-Komponente verlangen, nachteilig bzw. machten die Verwendung eines Lösungsmittels nötig.

Nimmt man die alkalische NCO-Hydrolyse in Gegenwart monofunktioneller Alkohole (entsprechend der nichtveröffentlichten deutschen Patentanmeldung P 30 39 600) vor, so kann — je nach NCO — und Alkohol-Reaktivität und Reaktionsbedingungen — eine Kettenabbruchsreaktion durch Bildung einer Urethangruppe erfolgen, was in den meisten Fällen unerwünscht ist.

Überraschenderweise wurde nun gefunden, daß man aromatische und/oder aliphatische bzw. cycloaliphatische modifizierte Polyamine, die diese obengenannten Nachteile nicht aufweisen, gewinnt, wenn man freie NCO-Gruppen aufweisende Verbindungen mit einem NCO-Gehalt zwischen 0,5 und 40 Gew.-% mit Basen in Gegenwart von Verbindungen mit mindestens zwei « H-aktive Gruppen » aufweisenden Verbindungen zur Reaktion bringt und aus den entstandenen Carbamatgruppen und/oder aus den entstandenen Carbamatgruppen und Urethan- und/oder Harnstoff- und/oder Thiourethangruppen (und gegebenenfalls weitere Gruppierung, bevorzugt eine oder mehrere Polyalkylenethergruppierungen) aufweisende Verbindungen die entsprechenden Polyamine nach vorbeschriebenen Verfahren

oder in schonender Weise nach eigenen Vorschlägen durch acidolytische und/oder thermische Zerlegung und/oder Extraktion des Carbamatgruppen aufweisende Verbindungen enthaltenden Reaktionsgemisches gewinnt.

Gegenstand der Erfindung ist somit ein Verfahren zur Herstellung von modifizierten, primäre aromatische und/oder aliphatische und/oder cycloaliphatische Aminogruppen aufweisenden Polyaminen mit Urethan- und/oder Harnstoff- und/oder Thiourethangruppen durch basische Hydrolyse von aromatisch und/oder aliphatisch und/oder cycloaliphatisch gebundenen, freie NCO-Gruppen aufweisenden Verbindungen zu Carbamatgruppen aufweisenden Verbindungen und Gewinnung der Polyamine aus dem Carbamatgruppen aufweisenden Verbindungen enthaltenden Reaktionsgemisch, dadurch gekennzeichnet, daß man

I. aromatische und/oder aliphatische und/oder cycloaliphatische NCO-Verbindungen aus der Reihe der durch teilweise Abwandlung der Isocyanatgruppen in Harnstoff-Biuret-, Uretdion- oder Isocyanurat-Gruppen modifizierten Polyisocyanate, NCO-Prepolymere oder NCO-Semipropolymere mit einem Gehalt von 0,5 bis 40 Gew.-% NCO, gegebenenfalls gelöst in einem NCO-inerten Lösungsmittel, durch Vermischen mit

a) im wesentlichen wasserlöslichen Basen aus der Gruppe der Oxide und Hydroxide der I. und II. Hauptgruppe des Periodensystems, der niedermolekularen Alkalisilikate und -aluminate und/oder der quarternären Tetraalkylammoniumhydroxide, in Gegenwart von

b) mindestens einer, zwei oder mehrere an aliphatische, cycloaliphatische oder aromatische Reste gebundene Hydroxy- und/oder Amino- und/oder Thiolgruppen aufweisenden Verbindung und

c) mindestens 1 Mol Wasser pro einem NCO-Äquivalent,

wobei das Verhältnis von Basen a) plus H-aktive Gruppen aus Verbindung b) zu NCO-Gruppen 0,3 : 1 bis 2 : 1 und das Äquivalentverhältnis von Basen a) zu H-aktiven Gruppen aufweisenden Verbindungen b) zwischen 1 : 9 bis 9,9 : 0,1 beträgt,
bei Reaktionstemperaturen unter 100 °C in Carbamatgruppen und Urethan- und/oder Harnstoff- und/oder Thiourethangruppen aufweisende Verbindungen überführt und

II. zwecks Gewinnung des modifizierten Polyamins aus der Carbamatgruppen und Urethangruppen und/oder Harnstoff- und/oder Thiourethangruppen aufweisende Verbindungen enthaltenden Reaktionsmischung diese entweder

1) mit einem Protonendonator behandelt und das Polyamin abtrennt und/oder
2) thermisch behandelt und das Polyamin abtrennt und/oder
3) mit einem Lösungsmittel extrahiert.

Gegenüber herkömmlichen Verfahren besitzt das vorliegende Verfahren folgende Vorteile :

1. Die Umwandlung der NCO-Verbindungen in Amine erfolgt als Eintopfverfahren in einfacher und wirtschaftlicher Verfahrensform.
2. Die den NCO-Verbindungen zugrundeliegenden Komponenten (modifizierte Polyisocyanate, Polyisocyanate, Polyole, Amine etc.) sind preiswerte, in großen Mengen verfügbare Produkte.
3. Die Reaktionsausbeuten sind praktisch quantitativ und die Raum/Zeit-Ausbeute ist hoch.
4. Herkömmliche Kesselapparaturen genügen ohne besondere apparative Vorkehrungen.
5. Das Verfahren ist jedoch auch vorteilhaft kontinuierlich durchzuführen.
6. Das Verfahren ist umweltfreundlich, da ohne Lösungsmittel gearbeitet werden kann und in der bevorzugten Ausführungsform lediglich geringe Mengen Kohlendioxid in Freiheit gesetzt werden können und nur die geringstmöglichen Salzmengen (kohlensaure Salze aus den Basen) anfallen.
7. Aus freie, niedermolekulare Polyisocyanate enthaltenden NCO-Verbindungen lassen sich ohne Behandlung der NCO-Verbindungen mittels Dünnschichten oder ähnlichen Verfahren von monomerem Polyamin praktisch freie Polyamine herstellen.
8. Es lassen sich in einfacher Weise und in einem Reaktionsschritt modifizierte Polyamine herstellen, die in einem Molekül über Urethangruppen, Thiourethangruppen oder Harnstoffgruppen (aus Di- oder Polyamin-Verlängerung) verknüpfte Segmente unterschiedlicher Art besitzen.
9. Aus einer z. B. difunktionellen NCO-Verbindung läßt sich durch Verwendung einer höherfunktionellen, « H-aktiven Gruppe » besitzenden Verbindung bie der NCO-Hydrolyse ein tri- oder höherfunktionelles Polyamin gewinnen.

Die nach dem erfindungsgemäßen Verfahren zugänglichen, aromatische und/oder primäre $NH_2$-Gruppen aufweisenden Polyamine können zur Herstellung von Polyurethanen wie gegebenenfalls zellförmigen Polyurethankunststoffen und Polyurethanschaumstoffen, durch Umsetzung von :

A) Polyisocyanaten und/oder blockierten Polyisocyanaten, mit
B) Polyaminen, sowie gegebenenfalls
C) weiteren, niedermolekularen und/oder höhermolekularen Verbindungen mit gegenüber gegebenenfalls blockierten Isocyanaten reaktiven Gruppen, gegebenenfalls

D) in Anwesenheit an sich bekannter Hilfs- und Zusatzstoffe,

Verwendung finden, wobei als Komponente B) die nach dem erfindungsgemäßen Verfahren hergestellten Polyamine eingesetzt werden.

Die zwei oder mehrere, aromatische und/oder aliphatische und/oder cycloaliphatische, freie NCO-Gruppen aufweisenden, im erfindungsgemäßen Verfahren einsetzbaren NCO-Verbindungen (im folgenden auch kurz « NCO-Verbindungen » genannt) stellen entweder modifizierte Polyisocyanate dar, wie sie durch teilweise Umwandlung der Isocyanatgruppen in Harnstoff-, Biuret-, Uretdion- oder Isocyanuratgruppen entstehen, oder sind sogenannte NCO-Prepolymere aus gegenüber NCO-Gruppen reaktiven H-Gruppen tragenden mehrwertigen Verbindungen des Molekulargewichts 18, 32 oder 60 bis 12 000 und (überschüssigen) Mengen an Polyisocyanaten oder sind gegebenenfalls Semiprepolymere aus NCO-Prepolymeren und zusätzlichen Polyisocyanaten.

Als modifizierte Polyisocyanate sind beispielsweise geeignet :

Harnstoffgruppen aufweisende Polyisocyanate (Wasser- Modifizierung) sind z. B. in der DE-PS 1 230 778, Biuretgruppen aufweisende Polyisocyanate in den US-PS 3 124 605, 3 201 372 sowie in der GB-PS 889 050, Isocyanuratgruppen aufweisende Polyisocyanate in der US-PS 3 001 973 und in den DE-PS'en 1 022 789 und 1 222 067 beschrieben. Uretdiongruppen enthaltende, dimere oder oligomere Polyisocyanate sind bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Harnstoff- und/oder Biuret- und/oder Uretdion- und/oder Isocyanuratgruppen, wie sie im erfindungsgemäßen Verfahren einsetzbar sind, haben üblicherweise einen NCO-Gehalt von 5 bis 37,5 Gew.-%, bevorzugt 10 bis 25 Gew.-% und sind im wesentlichen frei von Urethangruppen. Die im erfindungsgemäßen Verfahren eingesetzten NCO-Verbindungen sind besonders jedoch NCO-Prepolymere, wie sie in an sich bekannter Weise durch Umsetzung von hoch- und/oder niedermolekularen, Hydroxy- und/oder Amino- und/oder Thiolgruppen als reaktive Gruppen enthaltenden Verbindungen (Molekulargewicht 60 bis ca. 12 000) mit einem Überschuß an Polyisocyanat entstehen und einen NCO-Gehalt von vorzugsweise 1,2 bis 25 Gew.-% aufweisen.

Als Polyisocyanate zur Herstellung der freie NCO-Gruppen aufweisenden Verbindungen kommen im Prinzip beliebige, von hydrolysierbaren Gruppen, abgesehen von den NCO-Gruppen, im wesentlichen freie, aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\ (NCO)_n$$

in der

n 2 bis 4, vorzugsweise 2 und

Q einen aliphatischen Kohlenwasserstoffrest mit 3 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen,

oder

einen araliphatischen Kohlenwasserstoffrest mit 8 bis 15, vorzugsweise 8 bis 13 C-Atomen,

bedeuten, z. B. 1,4-Tetramethylendiisocyanat, 1,6-Hexamethylendiisocyanat, 1,12-Dodecandiisocyanat, ferner cycloaliphatische Diisocyanate in beliebigen Mischungen ihrer Stellungs- und/oder Stereoisomeren, z. B. Cyclobutan-1,3-diisocyanat, Cyclohexan-1,3- und -1,4-diisocyanat, 1-Isocyanato-3,3,5-trimethyl-5-isocyanatomethylcyclohexan, 2,4- und 2,6-Hexahydrotoluylendiisocyanat, Hexahydro-1,3- und/oder -1,4-phenylendiisocyanat, Perhydro-2,4'- und/oder -4,4'-diphenylmethandiisocyanat ; insbesondere sind jedoch aromatische Diisocyanate geeignet, z. B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, einschließlich seiner Alkyl- und Chlorsubstituierten Derivate und Naphthylen-1,5-diisocyanat. Geeignete Diisocyanate sind auch die in DE-A 2 922 966 beschriebenen 2,4'-Diisocyanatodiphenylsulfide und 2-(ω-Isocyanatoalkyl)-phenylisocyanate und die in z. B. EP 24 665 und DE-A 2 935 318 beschriebenen alkylsubstituierten Diphenylmethandiisocyanate.

Ferner kommen beispielsweise in Frage : Triphenylmethan-4,4', 4''-triisocyanat, Polyphenyl-polymethylen-polyisocyanate, wie sie durch Anilin-Formaldehyd-Kondensation und anschließende Phosgenierung erhalten und z. B. in den GB-PS'en 874 430 und 848 671 beschrieben werden, m- und p-Isocyanatophenylsulfonyl-isocyanate gemäß der US-PS 3 454 606, perchlorierte Arylpolyisocyanate, wie sie z. B. in der DE-B 1 157 601 (US-PS 3 277 138) beschrieben werden, Norbornen-diisocyanate gemäß US-PS 3 492 330, Isocyanuratgruppen aufweisende Polyisocyanate, wie sie z. B. in der US-PS 3 001 973, in den DE-PS'en 1 022 789, 1 222 067 und 1 027 394 sowie in den DE-PS'en 1 929 034 und 2 004 048 beschrieben werden, Urethangruppen aufweisende Polyisocyanate, wie sie z. B. in der BE-PS 752 261 oder in den US-PS'en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z. B. in der US-PS 3 654 196 beschrieben werden.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenyl-polymethylen-polyisocyanate, wie sie durch Anilin-Formaldehyd-Kondensation und anschließende Phosgenierung hergestellt werden (« rohes MDI »), sowie Urethangruppen, Isocyanuratgruppen oder Harnstoffgruppen aufweisende Polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Besonders geeignete Diisocyanate sind die Toluylendiisocyanate bzw. ihre technischen Isomerengemische, sowie gegebenenfalls auch ihre Dimeren.

Für die Herstellung der NCO-Prepolymeren werden vorzugsweise höhermolekulare Verbindungen mit einem Molekulargewicht von 400 bis 12 000, insbesondere 400 bis 6 000, eingesetzt, welche mindestens 2, vorzugsweise 2 bis 4, insbesondere 2 bis 3, reaktive Hydroxyl-, Amino- und/oder Thiolgruppen (bevorzugt Hydroxylgruppen) als reaktive Gruppen aufweisen und frei an leicht hydrolysierbaren Gruppen, wie z. B. Estergruppen, sind. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, insbesondere aber Hydroxylgruppen tragende Polyether.

Die erfindungsgemäß in Frage kommenden mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propandiol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z. B. die aus Glykolen, wie Di- oder Tri-ethylenglykol, 4,4'-Dihydroxyethoxydiphenylmethan, Hexandiol und Formaldehyd herstellbaren Verbindungen in Frage. Auch durch Polymerisation cyclischer Acetale wie z. B. Trioxan lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-1,4 und/oder Hexandiol-1,6, Di-, Tri- oder Tetra-ethylenglykol oder Thiodiglykol mit Diarylcarbonaten, z. B. Diphenylcarbonat, oder Phosgen hergestellt werden können (DE-B 1 694 080, 1 915 908 und 2 221 751 ; DE-A 2 605 024).

Zu den Polyamiden zählen z. B. die aus mehrwertigen gesättigten oder ungesättigten Carbonsäuren bzw. deren Anhydriden und mehrwertigen gesättigten oder ungesättigten Diaminen, Polyaminen und deren Mischungen gewonnenen, vorwiegend linearen Kondensate.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

Die genannten Polyhydroxylverbindungen können vor ihrer Verwendung noch in der verschiedensten Weise modifiziert werden : So läßt sich gemäß DE-A 2 210 839 (US-PS 3 849 515) und 2 544 195 ein Gemisch aus verschiedenen Polyhydroxylverbindungen durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z. B. gemäß DE-A 2 559 372 in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 550 862, 2 633 293 und 2 639 254

beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-PS 3 383 351, 3 304 273, 3 523 093, 3 110 695 ; DE-B 1 152 536) oder Polycarbonatpolyolen (DE-PS 1 769 795 ; US-PS 3 637 909) erhalten werden, sind für das erfindungsgemäße Verfahren geeignet. Bei Verwendung von Polyetherpolyolen, welche gemäß DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-A 2 714 291, 2 739 620 und 2 654 746), können mit besonderem Vorteil in Kombination mit mineralischen Füllstoffen eingesetzt werden.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich Können Mischungen der obengenannten Verbindungen mit mindestens zwei gegenüber Isocyanaten reaktionsfähigen Wasserstoffatomen mit einem Molekulargewicht von 400 bis 12 000, z. B. Mischungen von verschiedenen Polyethern, eingesetzt werden.

Für die Herstellung des im erfindungsgemäßen Verfahren einzusetzenden NCO-Prepolymeren kommen, gegebenenfalls nur anteilweise, als Ausgangskomponenten auch Verbindungen mit mindestens zwei gegenüber Isocyanaten reaktionsfähigen Wasserstoffatomen und einem Molekulargewicht von 18 bis 399, vorzugsweise 60 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 18 bis 399 verwendet werden.

Als Beispiele für derartige Verbindungen seien genannt : Wasser, Ethylenglykol, Propandiol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-PS 3 723 392), Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri- und Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxymethylhydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-A 2 639 084, 2 714 084, 2 714 104, 2 271 186, 2 738 154 und 2 738 512).

Erfindungsgemäß geeignet, jedoch im allgemeinen weniger bevorzugt, sind aliphatische Diamine wie beispielsweise Ethylendiamin, 1,4-Tetramethylendiamin, 1,6-Hexamethylendiamin, 1,12-Dodecamethylendiamin sowie deren Gemische, 1-Amino-3,3,5-trimethyl-5-amino-methylcyclohexan (« Isophorondiamin »), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diamino-perhydroanthrazene (DE-A 2 638 731) und cycloaliphatische Triamine gemäß DE-A 2 614 244. Auch Hydrazin und substituierte Hydrazine, z. B. Methylhydrazin, kommen erfindungsgemäß in Betracht.

Als Beispiele für aromatische Diamine, die ebenfalls weniger bevorzugt sind, seien die Ethergruppen aufweisenden Diamine gemäß DE-A 1 770 525 und 1 809 172 (US-PS'en 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-A 2 404 976), Diaminodiphenyldithioether (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einsetzbaren NCO-Verbindungen ebenfalls verwendbare Verbindungen sind organofunktionelle Polysiloxane, die zwei endständige, gegenüber Isocyanatgruppen reaktionsfähige Gruppen und Struktureinheiten der Formel $—O—Si(R)_2—$ aufweisen,

wobei in dieser Formel R für einen $C_1$-$C_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren. Erfindungsgemäß als Ausgangsmaterial geeignete organofunktionelle Polysiloxane sind beispielsweise in den DE-B 1 114 632, 1 190 176, 1 248 287, 2 543 638 oder in den DE-A 2 356 692, 2 445 648, 2 363 452, 2 427 273 oder 2 558 523 beschrieben. Die carbofunktionellen Endgruppen stellen vorzugsweise aliphatische, gegebenenfalls Heteroatome wie insbesondere Sauerstoff enthaltende Kohlenwasserstoffreste mit 1 bis 6 Kohlenstoffatomen dar, die mindestens eine Hydroxyl-, Mercapto- oder primäre bzw. sekundäre Aminogruppe aufweisen. Zu den bevorzugten carbofunktionellen Gruppen gehören primäre und sekundäre Hydroxylgruppen, sowie primäre und sekundäre Aminogruppen. Besonders bevorzugt sind solche Ausgangsverbindungen, die endständig primäre Hydroxylgruppen aufweisen. Die carbofunktionellen Gruppen können in den Ausgangsmaterialien beispielsweise in Form folgender carbofunktioneller Reste vorliegen : $—CH_2OH$, $—(CH_2)_4OH$, $—CH_2—O—CH_2—CH_2—OH$, $—CH_2—S—CH_2—CH_2—OH$, $—CH_2—S—CH_2—CHOH—CH_2OH$, $—CH_2SH$, $—CH_2—S—CH_2—CH_2—SH$, $—CH_2—NH_2$, $—(CH_2)_4NH_2$, $—CH_2—NH—C_4H_9$ oder $—CH_2—NH—C_6H_{11}$.

Die organofunktionellen Polysiloxane weisen mindestens 2, vorzugsweise 6 bis 30, Struktureinheiten der Formel $—O—Si(R)_2—$ bei einem Molekulargewicht von 194 bis 12 000, besonders bevorzugt zwischen 400 und 3 000, auf. Wie bereits dargelegt, können in den erfindungsgemäß geeigneten Polysiloxanen in der Kette neben den genannten Struktureinheiten auch Polyoxyalkylen-, insbesondere Polyoxyethylen- und/oder Polyoxypropyleneinheiten vorliegen. Die organofunktionellen Polysiloxane sind nach bekannten Verfahren zugänglich. Beispielsweise können die besonders geeigneten Hydroxymethylpolysiloxane durch direkte Umsetzung von Brommethylpolysiloxanen mit alkoholischer Kalilauge dargestellt werden. 4-Aminobutylpolysiloxane werden über die Hydrierung der leicht zugänglichen Nitrile hergestellt, Aminomethylsiloxane werden durch Aminierung der Halogenmethylsiliciumverbindungen mit Ammoniak oder primären Aminen gewonnen.

In vielen Fällen werden die funktionellen Gruppen zunächst an niedermolekularen Siloxanen eingeführt ; die so gewonnenen Produkte werden dann durch die bekannte Äquilibrierungsreaktion in höhermolekulare Polysiloxane übergeführt.

Geeignete organofunktionelle Polysiloxane sind beispielsweise Verbindungen der Formel

$$H—X—Y—(—Si(R)_2—O—)—_nSi(R)_2—Y—X—H$$

in welcher

R die bereits obengenannte Bedeutung hat,

X für —O—, —R'— (R' = aliphatischer oder cycloaliphatischer Kohlenwasserstoffrest mit bis zu 6 Kohlenstoffatomen), —S— steht,

Y für einen Alkylenrest mit 2 bis 4 Kohlenstoffatomen oder für einen durch Entfernung eines endständigen Sauerstoffatoms erhaltenen Oxyalkylen- bzw. Polyoxyalkylenrest (Alkylen = Ethylen und-/oder Propylen) mit bis zu 50 Oxyalkylen-Einheiten steht und

n eine ganze Zahl zwischen 1 und 100, vorzugsweise 5 bis 29, bedeutet.

Erfindungsgemäß besonders gut geeignete organofunktionelle Polysiloxane sind beispielsweise folgende Verbindungen :

$$HO-CH_2-Si(CH_3)_2-O[Si(CH_3)_2-O]_{12}-Si(CH_3)_2-CH_2OH$$

$$HO-\underset{CH_3}{CH}-CH_2-[Si(CH_2)_3-O]_{11}-Si(CH_3)_2-CH_2-O-\underset{CH_3}{CH}-CH_2-OH$$

$$HO-CH_2-Si(CH_3)_2-O-Si(CH_3)_2-CH_2-OH$$

$$HO-CH_2-Si(CH_3)_2-O-[Si(CH_3)_2-O]_{60}-Si(CH_3)_2-CH_2-OH$$ oder

$$n-C_4H_9-NH-CH_2-Si(CH_3)_2-O-[Si(CH_3)_2-O]_{18}-\underset{CH_2-NH-n-C_4H_9}{Si(CH_3)_2}$$

Die erfindungsgemäß besonders bevorzugten Organopolysiloxane entsprechen der allgemeinen Formel

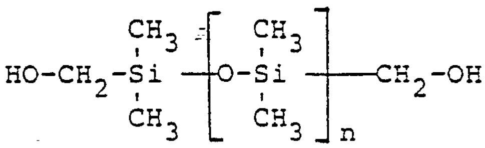

n = 5 bis 29

Sie werden in an sich bekannter Weise durch Äquilibrierung von 1,1,3,3-Tetramethyl-1,3-hydroxymethyldisiloxan der Formel

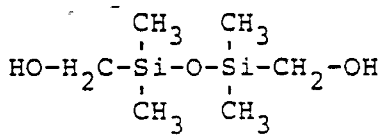

mit Octamethylcyclotetrasiloxan in Gegenwart von Schwefelsäure bzw. nach dem Verfahren der DE-B 1 236 505 hergestellt.

Die freie Isocyanatgruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer als 1, soll in der Regel zwischen 1,5 : 1 und 2,8 : 1 liegen. Selbstverständlich ist es möglich, einen noch größeren Überschuß an Polyisocyanat zu verwenden. Die Voraddukte haben je nach den gewählten Ausgangskomponenten im allgemeimeinen ölige bis wachsartige Konsistenz. Beträgt das NCO/OH-Verhältnis mehr als 2, so erhält man im wesentlichen nicht verlängerte Voraddukte, während NCO/OH-Verhältnisse von unter 2 eine Erhöhung des mittleren Molekulargewichts der Voraddukte zur Folge haben. Es ist, wie schon erläutert, auch möglich, niedermolekulare Polyole als Kettenverlängerungsmittel bei der Herstellung der Prepolymere anteilmäßig neben höhermolekularen Ausgangsverbindungen mitzuverwenden ; in diesem Fall erhält man ebenfalls höhermolekulare Voraddukte.

Es können die so erhaltenen NCO-Prepolymere noch einer Destillation unterworfen werden, bei der monomere Polyisocyanate entfernt werden. Dies kann z. B. unter Verwendung eines Dünnschichtverdampfers geschehen, doch ist es ein Vorteil des erfindungsgemäßen Verfahrens, daß man auf solche Destillationen im allgemeinen verzichten kann. Es Können so im erfindungsgemäßen Verfahren auch aus nicht gedünnschichteten (bzw. andersartig monomerenfrei gemachten) NCO-Prepolymeren Produkte ohne wesentlichen Gehalt an monomeren Polyaminen erhalten werden.

Für das erfindungsgemäße Verfahren werden NCO-Prepolymere bevorzugt, die aus höhermolekularen Polyetherglykolen, gegebenenfalls unter Mitverwendung von Kettenverlängerern der oben beschriebenen Art, und aliphatischen und/oder aromatischen Diisocyanaten im Äquivalentverhältnis von 1 : 1,5 bis 1 : 2,8, insbesondere ca. 1 : 1,5 bis 1 : 2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,5 Gew.-% bis 15 Gew.-%.

Im erfindungsgemäßen Verfahren können jedoch auch sogenannte « Semi-Prepolymere », d. h. Mischungen von NCO-Prepolymeren mit weiteren freien Polyisocyanaten, eingesetzt werden, die einen u. U. noch höheren Gehalt, z. B. bis 40 Gew.-% NCO, aufweisen können, jedoch ist dies im allgemeinen weniger bevorzugt.

Die freie NCO-Gruppen aufweisenden Verbindungen in Form ihrer (zumeist urethangruppenfreien) modifizierten Isocyanate, bzw. in Form ihrer (urethangruppenhaltigen) NCO-Prepolymeren bzw. ihrer « Semi-Prepolymeren » besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 15 Gew.-%. Je nach den Reaktionsbedingungen bei der Prepolymerherstellung können auch Allophanat-, Biuret- oder Cyanuratgruppen, sowie Uretdiongruppen entstanden sein ; bei Mitverwendung höhermolekularer H-aktive Verbindungen, z. B. von Polyethern, Polyacetalen, Polycarbonaten, Polythioethern, Butadienpolymerisaten oder Polydimethylsiloxanen sind auch Ether-, Acetal-, Carbonat-, Thioethergruppen, sowie Polybutadiengruppen oder Dimethylsiloxangruppen als weitere Gruppen enthalten. Besonders bevorzugt sind Alkylenethergruppierungen (bevorzugt Ethylenoxid- und/oder Propylenoxid- und/oder Tetramethylenoxid-Gruppierungen). Werden bei der NCO-Prepolymerbildung Aminoverbindungen oder Wasser als Ausgangsstoffe eingesetzt, so enthalten diese beispielsweise auch Harnstoffverknüpfungen.

Mittels des erfindungsgemäßen Verfahrens werden aus den freien NCO-Gruppen aufweisenden Verbindungen durch die NCO-Hydrolysereaktion und durch die Reaktion der erfindungsgemäß gleichzeitig anwesenden H-aktive Gruppen besitzenden Verbindungen (vorzugsweise mit OH- und/oder Amino- und/oder SH-Gruppen) mit den NCO-Verbindungen aus dieser Reaktion mit Urethangruppen und/oder Harnstoff- und/oder Thiourethangruppen modifizierte Polyamine erhalten. Diese modifizierten Polyamine können je nach Verwendung der NCO-Gruppen aufweisenden Verbindungen aromatische und/oder

aliphatische und/oder cycloaliphatische primäre Aminogruppen aufweisen. Diese Polyamine weisen weiterhin entsprechend Urethan- und/oder Harnstoff- und/oder Uretdion- und/oder Cyanurat- und/oder Biuretgruppen, sowie gegebenenfalls Ether- und/oder Acetal- und/oder Carbonat- und/oder Thioether- und/oder Dialkylsiloxangruppen und/oder die Reste von Polybutadienen auf, wie diese in den NCO-Verbindungen vorgelegen haben. Durch Nebenreaktionen können jedoch auch zusätzliche Bindungen entstehen, z. B. Harnstoffgruppen aus bereits verseiften Anteilen und frischen NCO-Verbindungen während der Hydrolysereaktion. Dies kann z. B. bei aliphatischen NCO-Verbindungen als Nebenreaktion eintreten. In der bevorzugten Ausführungsform des erfindungsgemäßen Verfahrens sind diese Nebenreaktionen jedoch praktisch weitgehend zurückgedrängt.

Die Menge der in den Polyaminen enthaltenden $NH_2$-Gruppen entspricht der Menge der NCO-Gruppen in den NCO-Verbindungen, abzüglich der Menge an NCO-Gruppen, die durch die Reaktion mit den H-aktiven Gruppen aufweisenden Verbindungen verbraucht werden, also etwa 0,1 bis 20,2 Gew.-% $NH_2$, bevorzugt 0,47 bis 13,1 Gew.-% $NH_2$ und besonders bevorzugt 0,5 bis 6,1 Gew.-% $NH_2$.

Die Herstellung aromatischer Polyamine aus aromatischen NCO-Verbindungen nach dem erfindungsgemäßen Verfahren ist bevorzugt.

Im erfindungsgemäßen Verfahren wird die NCO-Verbindung als Startkomponente in der Regel ohne Lösungsmittel verwendet. Es können jedoch z. B. zur Viskositätserniedrigung auch Lösungen von NCO-Verbindungen, besonders NCO-Prepolymeren, in NCO-inerten Lösungsmitteln verwendet werden, die vorzugsweise auch wassermischbar sind. Geeignete Lösungsmittel in diesem Sinne sind z. B. Dimethoxyethan, Diethylenglykoldimethylether, Dioxan oder Tetrahydrofuran ; weniger geeignete Lösungsmittel in diesem Sinne sind z. B. Kohlenwasserstoffe, chlorierte Kohlenwasserstoffe, sowie niedere Aromaten, chlorierte und/oder nitrierte Aromaten. Bevorzugt werden die NCO-Verbindungen jedoch dann als Lösungen in den o. g. Lösungsmitteln verwendet, wenn es sich um feste oder im Bereich von 20 bis 80 °C unschmelzbare, schwer schmelzbare oder zähflüssige NCO-Prepolymere handelt. Werden flüssige NCO-Verbindungen ohne Lösungsmittel im erfindungsgemäßen Verfahren eingesetzt, haben sie vorteilhafterweise eine Temperatur von 20 bis 80 °C, bevorzugt von 40 bis 70 °C, um ihre Viskosität niedrig zu halten.

Werden die NCO-Verbindungen in gelöster Form eingesetzt, so beträgt die bevorzugte Temperatur 20 bis 40 °C, höchstens jedoch die dem Siedepunkt des betreffenden Lösungsmittels entsprechende Temperatur.

Werden die NCO-Verbindungen als Lösungen verwendet, so können z. B. auf 100 Teile Lösungsmittel 1 bis 400 Teile NCO-Verbindung eingesetzt werden.

Die Vermischung von NCO-Verbindungen und dem basischen Medium soll vorzugsweise zu einer möglichst niedrigen Temperatur der vermischten Reaktionslösung führen, um Nebenreaktionen möglichst auszuschließen. Die Temperatur in der Reaktionsmischung der Komponenten sollte möglichst unter 100 °C, besser unterhalb von 70 °C, vorzugsweise jedoch unterhalb von 40 °C liegen, ist jedoch bei kontinuierlicher Arbeitsweise weniger kritisch.

Es wird daher vorzugsweise die Temperatur des basischen, niederviskosen Mediums bereits vor der Umsetzung möglichst tief gewählt, z. B. — 25 bis + 40 °C, bevorzugt 0 bis 25 °C. Zusätzlich kann während der Reaktion weiter gekühlt werden, um die Reaktionstemperatur möglichst im optimalen Bereich zu halten. Die zulässigen Reaktionstemperaturen hängen jedoch auch von der Art der Vermischung und Reaktionsführung ab.

Als erfindungsgemäßes Medium wird im vorliegenden Verfahren im allgemeinen eine Mischung oder Lösung von Wasser, Basen und NCO-aktive Gruppen besitzenden Verbindungen verwendet. Die minimale Menge an Wasser beträgt dabei die stöchiometrisch notwendige Menge von 1 Mol Wasser pro 1 Mol an NCO-Gruppen, die in $NH_2$-Gruppen umgewandelt werden sollen.

Geeignete, ausreichend wasserlösliche Basen sind z. B. Alkalihydroxide, Erdalkalihydroxide und Erdalkalioxide, niedermolekulare Alkalisilikate und -aluminate, und/oder Tetraalkylammoniumhydroxide. Besonders bevorzugt sind Natrium- und Kaliumhydroxid.

Als dem basischen Medium beizumischende, « H-aktive Gruppen » enthaltende Verbindungen kommen all diejenigen Hydroxy-, Amino- und Thiolgruppen enthaltenden Verbindungen in Frage, wie sie bereits als Aufbaukomponenten der im erfindungsgemäßen Verfahren einsetzbaren NCO-Verbindungen genannt wurden.

Bevorzugt als « H-aktive Gruppen » enthaltende Verbindungen werden im erfindungsgemäßen Verfahren polyfunktionelle Hydroxy- und/oder primären Amino-Gruppen besitzende Verbindungen eingesetzt. Besonders bevorzugt sind di- bis tetrafunktionelle Verbindungen des Molekulargewichts 62 bis ca. 2 000, insbesondere solche mit mindestens zwei primären Hydroxygruppen, z. B. Ethandiol, Butandiol-1.4, Hexandiol-1.6, Di-, Tri-, Tetra-ethylenglykol, Polyethylenglykole, Formitgemische, N-Methyl-diethanolamin, Trimethylolethan, Trimethylolpropan, Addukte aus Ethylenoxid an z. B. Trimethylolpropan, Triethanolamin, Glycerin oder Pentaerythrit.

Unter den aminofunktionellen Verbindungen sind aromatische Di- und Polyamine bevorzugt. Die Mercaptogruppen als « H-aktive Gruppen » enthaltenden Verbindungen sind weniger bevorzugt. Besonders bevorzugte Verbindungen sind die difunktionellen Verbindungen, insbesondere Butandiol-1.4, Hexandiol-1.6, Trimethylhexandiol, Neopentylglykol.

Selbstverständlich können auch Mischungen verschiedener, H-aktive Gruppen besitzender Verbindungen, gegebenenfalls auch unterschiedlicher Funktionalität im erfindungsgemäßen Verfahren eingesetzt werden. Verbindungen, die nur eine H-aktive Gruppe aufweisen, wie z. B. Methanol, Ethanol, die Propanole, Butanole (n-, sek-, iso- und tert.-Butanol), Hexanole, Cyclohexanol, primäre Butylamine, Hexylamine, Cyclohexylamin, Stearylamin, Anilin, Naphthylamine, N,N-Dimethylhydrazin, N,N-Dimethylaminopropylamin und andere können neben zwei- und mehr- funktionellen H-aktiven Verbindungen mitverwendet werden. Diese monofunktionellen Verbindungen werden bevorzugt dann mitverwendet, wenn mehr als difunktionelle NCO-Prepolymere in die Polyamine überführt werden, da sie dann als Kettenabbrecher die Funktionalität herabsetzen.

Möglich, aber weniger bevorzugt ist die Verwendung von weiteren organischen Lösungsmitteln, die vorzugsweise mit Wasser mischbar sind, z. B. Dioxan, Tetrahydrofuran und Dimethoxyethan. Beispielsweise können auf 100 Teile Wasser 10 bis 1 000 Teile Cosolvens mitverwendet werden.

Die Mischung aus der Base, Wasser, den mindestens zwei « H-aktive Gruppen » besitzenden Verbindungen sowie gegebenenfalls dem Cosolvens oder untergeordneten Mengen an gegebenenfalls monofunktionellen « H-aktiven Verbindungen » wird im folgenden kurz « basisches Medium » genannt.

Die Reaktion der NCO-Verbindungen mit dem basischen Medium kann nach verschiedenen Ausführungsformen durchgeführt werden.

In einer diskontinuierlichen Ausführungsform wird die NCO-Gruppen aufweisende Verbindung in das basische Medium eingeführt. Dies kann mittels eines Tropftrichters oder durch z. B. maschinelle Einspritzung mit einer Düse geschehen, wobei durch intensives Rühren eine möglichst gute Verteilung angestrebt wird. Die Dauer der Einführung der NCO-Verbindungen richtet sich nach der Wärmetönung der Reaktion, wobei durch Kühlung dafür Sorge getragen werden muß, daß die Temperatur der Vorlage im allgemeinen nicht die oben angeführten Temperaturschranken, im diskontinuierlichen Fall etwa 40 °C, vorzugsweise 20 °C, übersteigt. Dies ist besonders wichtig im Falle von z. B. tri- und höherfunktionellen NCO-Prepolymeren, während im Falle eines difunktionellen Prepolymers ein kurzzeitiges Ansteigen der Temperatur auf ca. 60 bis 70 °C tolerierbar ist.

Üblicherweise beträgt das Verhältnis der vorgelegten und einzuführenden Flüssigkeitsvolumina etwa 10 : 1 bis 1 : 3, dies gilt natürlich nicht, wenn, was möglich, aber nicht bevorzugt ist, NCO-Prepolymere in fester, aber dann möglichst feinpulvriger Form zugegeben werden.

In einer kontinuierlichen Ausführungsform, die für eine Großtechnische Produktion besonders geeignet ist, werden NCO-Verbindungen (gegebenenfalls als Lösung) und die wäßrige Base getrennt einem gemeinsamen Reaktionsraum zudosiert, z. B. mittels eines Durchflußmischers intensiv vermischt und so zur Reaktion gebracht und aus dem Mischraum schnell ausgetragen. Die Dosierung der Komponenten kann z. B. über graduierte Tropftrichter oder mittels einer Kolben- und/oder Membran-Dosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung zu vermischen, zur Reaktion zu bringen und aus dem Reaktionsraum auszutragen.

Bei den geeigneten Durchflußmischern unterscheidet man zwischen den statischen Mischern mit festen Einbauten und dynamischen Mischern mit beweglichen Einbauten nach dem Rotor/Stator-Prinzip. Sie können gegebenenfalls geheitz oder gekühlt werden.

Die erforderliche Mischenergie wird bei den statischen Mischern über die Pumpen aufgebracht, während bei den dynamischen Mischern ein separater Motor den Rotor antreibt.

In allen Fällen hängt der Reaktionsumsatz der Isocyanatgruppen auch von der aufgebrachten Leistung bzw. den entsprechend erzeugten Scherkräften, d. h. von der feinen Dispergierung der NCO-Verbindung im basischen Medium, ab.

Die statischen Mischer lassen sich unterteilen in

a) Mischer mit einfachen Einbauten (z. B. Wendel beim Static Mixer ® der Firma Kenics Corp./USA) ;

b) Mehrkanal-Mischer (z. B. AMK-Ross-ISG-Mischer der Aachener Misch- und Knetmaschinen-Fabrik/Bundesrepublik Deutschland ;

c) sogenannte Packungsmischer, wie z. B. der statische Mischer der Fa. Sulzer AG (Winterthur/Schweiz) und der BMK-Mischer der Bayer AG/Bundesrepublik Deutschland ;

d) als weitere Variante der statischen Mischer können Mischdüsen, z. B. die der Fa. Lechler (Stuttgart/Bundesrepublik Deutschland) oder die Mischkammern in den HK-Maschinen der Fa. Hennecke (Birlinghofen/Bundesrepublik Deutschland), in die die Ausgangsprodukte unter hohem Druck eingedüst werden (Gegenstrominjektion), angesehen werden.

Ähnlich arbeitet auch der Intermixer® der Fa. Sonic (Connecticut/USA), bei dem das zu dispergierende Material auf eine bewegliche Zunge gedüst wird, die dadurch in Schwingungen (ca. 500 Hz) gerät und so das durchfließende Produkt intensiv dispergiert bzw. mischt.

Als dynamische Mischer kommen für das erfindungsgemäße Verfahren beispielsweise die Durchflußmischer der Firmen Ekato RMT (Schopfheim/Bundesrepublik Deutschland), Lightnin (Neu-Isenburg/Bundesrepublik Deutschland) und Hennecke (Stachelrührer) in Betracht, die ebenso wie die bekannten Kreiselhomogenisiermaschinen, z. B. Supraton® der Fa. Supraton Auer & Zucker OHG

(Norf/Bundesrepublik Deutschland) oder Dispax-Reaktor® der Fa. Janke & Kunkel KG (Staufen/Bundesrepublik Deutschland) nach dem Stator-Rotor-Prinzip arbeiten, dabei jedoch nicht als Förderorgane benutzt werden können. Die aufzubringende Dispergierleistung beträgt je nach gewünschter Dispergiergrad, verwendetem Mischertyp und Viskosität der Ausgangsstoffe etwa 1 bis über 10 kW/l Mischerinhalt.

Im allgemeinen werden die Reaktionskomponenten bei etwa —25 bis 40 °C dem Durchflußmischer zugeführt. Infolge der Scherkräfte beim Einsatz eines bevorzugt eingesetzten dynamischen Mischers und in Abhängigkeit von der entstehenden Reaktionswärme steigen die Reaktionstemperaturen auf ca. 50 bis 150 °C an. Im allgemeinen ist es jedoch zweckmäßig, die Temperatur (gegebenenfalls durch Kühlung des Mischaggregats) unter 100 °C zu halten.

Werden weitere Co-Lösungsmittel verwendet, so muß die Temperatur unter deren Siedepunkt gehalten werden, wenn er niedriger als der von Wasser ist.

Die Reaktionskomponenten werden in möglichst dünnviskoser Form und bei jeweils möglichst niedriger Temperatur der Dosierkomponenten dem Durchflußmischer zugeführt. Dabei können die Einzelkomponenten, wie bereits erwähnt, auf die angegebenen Temperaturen erwärmt bzw. gekühlt werden. Infolge der hohen Scherkräfte beim Einsatz von dynamischen Mischern und in Abhängigkeit von der entstehenden Reaktionswärme können die Temperaturen im Mischraum deutlich ansteigen. Im allgemeinen ist es jedoch zweckmäßig, die Temperatur (gegebenenfalls zur Kühlung des Mischaggregats) unter 100 °C zu halten, vorzugsweise unterhalb 60 °C und besonders bevorzugt zwischen 20 und 40 °C. Wegen der hohen Durchmischung, schnellen Reaktion und Austragung des gebildeten Reaktionsgemisches ist die Temperatur nicht ganz so kritisch wie im diskontinuierlichen Verfahren. Werden weitere Co-Lösungsmittel verwendet, so muß die Temperatur zweckmäßig unter deren Siedepunkt gehalten werden. Die Mengen-Äquivalente der als Basen vorzugsweise verwendeten Alkali-, Erdalkali- und Tetraalkyl-Ammoniumhydroxide liegen zwischen 0,3 : 1 bis 2 : 1, bezogen auf eine NCO-Gruppe. Bei kontinuierlicher Reaktion können gegebenenfalls auch « H-aktive Gruppen » enthaltende Lösungsmittel wie Isopropanol oder t.-Butanol verwendet werden.

Die Struktur der beim erfindungsgemäßen Verfahren erhaltenen Verfahrensprodukte ist in hohem Maße abhängig vom Verhältnis Wasser : Base : « H-aktive Verbindung » (mit vorzugsweise zwei H-aktiven Gruppen) und deren Verhältnis zur NCO-Verbindung. Die Veranschaulichung dieser gegenseitigen Abhängigkeiten wird noch dadurch erschwert, daß die Produkte auch von Verfahrensparameter wie z. B. Rührgeschwindigkeit stark beeinflußt werden.

Geht man davon aus, daß im basischen Medium keine « H-aktive Gruppe » aufweisende Verbindung vorliegt, wie es jedoch dem erfindungsgemäßen Verfahren nicht entspricht und hier nur zur Erklärung angeführt wird, so wird mit einem Base/NCO-Verhältnis von ca. 0,3 : 1 bis 1 : 1 ein aminisches Produkt erhalten, das mit zunehmenden Base/NCO-Verhältnis immer weniger Harnstoffeinheiten enthält und sich in seiner Struktur immer mehr dem Produkt nähert, wie es durch vollständige Konversion aller NCO-Gruppen in $NH_2$-Gruppen erhalten wird.

Nun ist es aber keineswegs so, daß bei einem Base/NCO-Verhältnis von $\geq 1$ keine Harnstoffgruppen mehr gebildet werden. Durch eine Reihe von Faktoren (Temperatur, Rührgeschwindigkeit, Inhomogenitäten der Basen-Verteilung in Folge eines Viskositätsaufbaus etc.) werden nämlich auch bei einem Base/NCO-Verhältnis von $\geq 1$ Harnstoffeinheiten gebildet. Dies führt bei Verwendung von monomerfreien NCO-Verbindungen zu Vorverlängerungen über Harnstoffgruppen (über Wasserverlängerung), bei monomerhaltigen vorzugsweise zur Bildung von niedermolekularen Harnstoffverbindungen neben über Harnstoffeinheiten vorverlängerten aminischen Produkten. Dies gilt insbesondere für eine diskontinuierlicher Verfahrensform. Es hat sich erwiesen, daß das Base/NCO-Verhältnis, ab dem Harnstoffbildung praktisch nicht mehr auftritt, bei ca. 1,15-1,30 liegt. Nun kann für jedes Äquivalent Base ein Äquivalent einer « H-aktive Gruppen » besitzenden Verbindung gesetzt werden, so daß annähernd jede NCO-Gruppe, die nicht in eine $NH_2$-Gruppe umgewandelt wird, mit einer « H-aktiven Gruppe » reagiert. Die Menge der « H-aktive Gruppen » besitzenden Verbindung ist besonders bevorzugt so, daß das Verhältnis der Summe der Äquivalente aus Base und « H-aktive Gruppen » besitzender Verbindungen zu Äquivalenten an Isocyanatverbindung ca. 1,15-1,30 ist, wenn Harnstoffbildung weitgehend ausgeschlossen sein soll, sonst $\geq 0,3$ bis 1,0 ist, prinzipiell aber auch $< 0,3$ sein kann, was jedoch aus praktischen Gründen wenig bevorzugt ist.

Die Menge an zugesetzter, « H-aktive Gruppen » aufweisenden Verbindungen bzw. das Verhältnis zwischen « H-aktive Gruppen » aufweisenden Verbindungen und Base richtet sich nach der Art der eingesetzten NCO-Verbindungen und dem mit der Zugabe der « H-aktive Gruppen » aufweisenden Verbindungen beabsichtigten Zweck.

Ist es z. B. beabsichtigt, bei der Herstellung eines Amins aus einem NCO-Prepolymer, das noch geringe Reste monomeres Polyisocyanat, z. B. 1-2 Gew.-%, enthält, das Mitentstehen niedermolekularen Polyamins (aus diesem monomeren Polyisocyanat) zu verhindern oder zumindest sehr stark zu vermindern, so werden natürlich geringere Mengen an « H-aktive Gruppen » aufweisende Verbindung benötigt als wenn ein NCO-Semiprepolymer (d. h. eine Mischung aus NCO-Prepolymer und > 2 Gew.-% freier Diisocyanate) in ein Gemisch mehrerer Amine umgewandelt werden soll oder wenn aus einer linearen Diisocyanatverbindung durch Umsetzung mit einer tri- oder höherfunktionellen « H-aktive Gruppen » aufweisenden Verbindung ein tri- oder höherfunktionelles Polyamin hergestellt werden soll. Ebenso wird weniger dieser « H-aktive Gruppen » aufweisenden Verbindung benötigt, wenn lediglich die

Funktionalität der resultierenden Amine bezüglich der zugrundeliegenden Isocyanatverbindung erhöht werden soll (z. B. eine Funktionalitätserhöhung von 2,0 auf 2,3 durch Zugabe von trifunktionellen Polyolen oder erniedrigt werden soll, z. B. durch Zugabe von Monoalkoholen). Insgesamt bewegt sich das Verhältnis von Basenäquivalenten zu H-aktiven Gruppen in den « H-aktive Gruppen » aufweisenden Verbindungen im Bereich von 1 : 9 bis 9,9 : 0,1, bevorzugt 1 : 4 bis 9 : 1.

Zur Erleichterung der Reaktion der Isocyanatgruppen mit der wäßrigen Base können verschiedene Zusätze verwendet werden. So können zum Homogenisieren ein oder mehrere handelsübliche Emulgatoren zugesetzt werden, z. B. in Mengen von 0,01 bis 1 Gew.-Teil auf 100 Teile Reaktionsmischung.

Desgleichen ist es möglich, dem basischen Medium Beimengungen zuzusetzen, wie sie für den beabsichtigen Verwendungszweck geeignet sind. Dies können (im allgemeinen lösliche) Antistatika, Antifoulingmittel, Hydrophobiermittel, Weichmacher, Stabilisatoren, Pigmente etc. sein. Bevorzugt werden diese Beimengungen jedoch nach der Vermischung mit der NCO-Verbindung zugesetzt.

Nach der vollständigen Umwandlung aller NCO-Gruppen ist es gegebenenfalls möglich, aber im allgemeinen nicht nötig und auch weniger bevorzugt, vor der weiteren Behandlung Wasser oder ein organisches, mit Wasser mischbares Lösungsmittel hinzuzufügen. Geeignete Lösungsmittel solcher Art sind niedere Alkohole wie Methanol, Ethanol, Isopropanol, Ether wie Tetrahydrofuran, Dioxan, Dimethoxyethan oder Diethylenglykoldimethylether.

Die durch das Vermischen der NCO-Verbindungen mit dem basischen Medium erhaltenen, Carbamatgruppen enthaltenden Verbindungen werden erfindungsgemäß in Aminogruppen enthaltende Verbindungen dadurch umgewandelt, daß das Carbamatgruppen und Urethan- und/oder Harnstoff- und/oder Harnstoff- und/oder Thiourethangruppen und gegebenenfalls weitere Gruppen aufweisende Verbindungen enthaltende Reaktionsgemisch zur Gewinnung der aminischen Produkte entweder 1.) mit einer mindestens äquivalenten Menge (bez. auf die Menge an eingesetzter Base) eines Protonendonators behandelt wird (Verfahren A), oder 2.) thermisch behandelt wird (Verfahren B) oder 3.) mit einem Lösungsmittel extrahiert wird (Verfahren C). Alle drei Verfahren können kontinuierlich als auch diskontinuierlich durchgeführt werden. Ebenso ist bei beiden Verfahrensvarianten, insbesondere jedoch bei 1.), günstig, Vakuum anzulegen, wodurch die Zerlegung der Carbamatgruppen aufweisenden Verbindungen begünstigt wird. Beide Verfahren können auch kombiniert werden.

Verfahren A Behandlung mit einer mind. äquivalenten Menge eines Protonendonators

Die Behandlung des Carbamatgruppen und/oder Carbamatgruppen und Urethan- und/oder Harnstoff- und/oder Thiourethangruppen aufweisenden Verbindungen enthaltenden Reaktionsgemisches (im folgenden kurz « Carbamatmischung » genannt) mit einer mind. äquivalenten Menge eines Protonendonators erfolgt mit einer in einem unlöslichen, polymeren Skelett fixierten Säure (Verfahren A 1) oder einer flüssigen oder löslichen Mineral- oder organischen Säure (Verfahren A 2). Beide Verfahrensmodifikationen können sowohl (nicht bevorzugt) kombiniert als auch kontinuierlich oder diskontinuierlich durchgeführt werden.

Verfahrensvariante A 1

Als Protonendonatoren einsetzbare saure Ionenaustauscher sind im erfindungsgemäßen Verfahren alle Stoffe geeignet, die in einem polymeren unlöslichen Grundgerüst bewegliche acide Wasserstoffatome besitzen. Besonders geeignet als polymere Säuren sind im erfindungsgemäßen Verfahren Ionenaustauscherharze, die als polymere Basis ein Styrol/Divinylbenzol-Skelett besitzen, an das Sulfonsäuregruppen als saure Funktionen gebunden sind, ferner gegebenenfalls polymere Acrylsäure mit COOH-Ankergruppen.

Verfahrensgemäß wird die Carbamatmischung mit dem Ionenaustauscher vereinigt. Für das erfindungsgemäße Verfahren ist es unwesentlich, ob zur vorgelegten Carbamatmischung das saure Ionenaustauscherharz zugegeben (Verfahren 1) oder ob umgekehrt vorgegangen wird (Verfahren 2) oder ob Ionenaustauscherharz und Carbamatmischung getrennt einen gemeinsamen Reaktionsraum, wobei gegebenenfalls ein Teil eines der Reaktanten vorgelegt werden kann, zudosiert werden. Ionenaustauscherharz und Carbamatmischung werden in dem Maße miteinander vereinigt, wie es die Heftigkeit der Gasentwicklung und die Dimensionierung der Apparatur zuläßt (10 bis 300 Minuten).

Diese Gasentwicklung tritt jedoch erst nach Neutralisierung eines etwaigen Basenüberschusses auf.

Bei der Vereinigung beider Komponenten tritt keine oder nur geringe Temperaturerhöhung auf ; ein gegebenenfalls durch externes Heizen einzustellender Temperaturbereich von 10 bis 70 °C erwies sich als günstig.

Es wird solange Ionenaustauscher zugesetzt, bis keine Gasentwicklung zu erkennen ist. Kurzzeitiges Erwärmen auf 60 bis 100 °C treibt gelöstes Kohlendioxid aus. Pro Alkaliäquivalent werden äquivalente oder mindestens geringfügig überschüssige Mengen, vorzugsweise aber 1,01 bis 1,8 Äquivalente von dem sauren Ionenaustauscherharz entstammende Wasserstoffionen eingesetzt.

Das umgekehrte Verfahren — Ionenaustauscher vorgelegt — ist v. a. dann zu bevorzugen, wenn die Reaktionsdaten bekannt sind (Verfahren 2), sowie bei kontinuierlicher Arbeitsweise. Am Endpunkt der Reaktion ist das Reaktionsgemisch basisch, wie es dem Gehalt an freiem Amin und dessen Basenstärke

entspricht.

Die einfache Aufarbeitung gestaltet sich wie folgt :

Die flüssige, das aminische, flüssige oder gelöste Verfahrensprodukt enthaltende Phase und der beladene Ionenaustauscher (Festphase) werden durch Filtration voneinander getrennt. Bevorzugt wird der beladene Ionenaustauscher mit einem geeigneten Lösungsmittel (z. B. Methanol, Ethanol, Dioxan) gewaschen und die Waschflüssigkeit mit dem 1. Filtrat vereinigt.

Nach dem Abdestillieren des Solvens (z. B. 17 mbar/100 °C und 0,1 bis 1,3 mbar/100 °C) hinterbleiben die Verfahrensprodukte als farblose bis hellgelbe Flüssigkeiten oder plastische oder kristalline Feststoffe.

Eine kontinuierliche Verfahrensform dieses Verfahrens bedient sich einer stationären Anordnung von polymerem Säurematerial. Geeignet ist z. B. eine mit saurem Ionenaustauscherharz gefüllte Säule aus z. B. Glas, durch die das Carbamatgemisch gedrückt wird und/oder durch die Schwerkraft fließt, wobei dieser Vorgang gegebenenfalls mehrmals wiederholt werden kann. Durch geeignete Ventilierung muß das Kohlendioxid abgelassen werden. Nach vollständiger Bildung des aminischen Produkts wird dies durch z. B. Destillation aus der Produktphase abgetrennt. Die beladenen Säulen werden im Anschluß an die Carbamatgemisch-Zersetzung mit z. B. Methanol nachgewaschen und diese Waschphase gegebenenfalls mit der Produktphase vereinigt. Nach dieser Extraktion wird nach bekannten Methoden das Ionenaustauscherharz regeniert.

Vorteilhaft ist die Verwendung einer « Ionenaustauscherbatterie » in der in getrennten, jedoch zusammenschaltbaren Säulen gleichzeitig die acidolytische Zersetzung, die Solvensextraktion und die Regeneration des Säulenmaterials vorgenommen werden kann.

Verfahren A 2

In Verfahren A 2 wird eine flüssige oder lösliche organische oder Mineralsäure eingesetzt. Bevorzugt wird mit genauen Äquivalenten an Säure (bezogen auf die Gesamtmenge an Basen) garbeitet, doch ist auch die Verwendung eines Säureüberschusses, wie sie in DE-OS 2 948 419 beschrieben wird, möglich. Verfahren A 2 wird in zwei Modifikationen durchgeführt, wobei Verfahrensmodifikation A 2/2 vorteilhafterweise auch kontinuierlich durchgeführt werden kann.

Verfahrensmodifikation A 2/1

Die Carbamatreaktionsmischung wird zugetropft, die Säurekomponente vorgelegt.

Als Säuren kommen starke Säuren zur Anwendung, z. B. gegebenenfalls wäßrige Mineralsäure wie Salzsäure, Schwefelsäure, verdünnte Salpetersäure, Phosphorsäure ; möglich ist auch die Verwendung von starken organischen Säuren wie Oxalsäure, Ameisensäure oder Essigsäure, oder ähnlichen starken organischen Säuren.

Bevorzugt werden Salzsäure und Schwefelsäure verwendet, besonders bevorzugt ist Schwefelsäure. Die vorgelegte Säure hat zweckmäßigerweise eine Temperatur von 0 bis 20 °C. Unter Rühren wird die Carbamat-Reaktionsmischung in einem Zeitraum von 1 Minute bis 6 Stunden, bevorzugt 30 Minuten bis 2 Stunden, zugegeben, wobei die Temperatur der Reaktionsmischung unter 50 °C bzw. 25 °C durch externe Kühlung gehalten wird. Die Zeitdauer der Carbamatzugabe ist abhängig von der Heftigkeit der Gasentwicklung.

Das Säure/Basen-Äquivalentverhältnis beträgt etwa 1 : 1, d. h. pro val Base wird 1 val Protonen eingesetzt (etwa äquivalente Mengen). Das Reaktionsgemisch ist dann neutral bis basisch, wie es dem pH-Wert eines Gemisches aus Alkalisalzen bzw. Aminsalzen mit einer aromatischen bzw. aliphatischen Aminoverbindung entspricht. 5 bis 30 Minuten wird bei 20 °C weitergerührt.

Bei einer flüssigen Aminoverbindung wird die Aufarbeitung z. B. so vorgenommen, daß der gesamte Reaktionsansatz durch Destillation von flüchtigen Anteilen befreit (Destillation z. B. bei 15 bis 700 Torr und 40 bis 150 °C Badtemperatur), die ausgefallenen Salzanteile durch Filtration (z. B. mit einer beheizbaren Drucknutsche) abgetrennt und das verbliebene aminische Produkt z. B. innerhalb 2 Stunden bei 0,013 bis 20 mbar und 80 bis 150 °C von Spuren flüchtiger Komponenten befreit wird.

Fällt die Aminoverbindung fest an, so wird sie abfiltriert und wenn nötig, nach üblichen Methoden wie Umkristallisation oder Umfällung, gereinigt.

Verfahrensmodifikation A 2/2

Methode A 2/2 ist gegenüber Methode A 2/1 bevorzugt.

Hierbei werden die Carbamatkomponente und die Säurekomponente getrennt einem gemeinsamen Reaktionsraum zudosiert. Bevorzugt wird dabei so verfahren, daß in gleichen Zeiträumen gleiche val-Mengen an Basen und Säuren den Reaktionsraum erreichen, so daß Ungleichgewichte zwischen beiden Reaktionskomponenten vermieden werden. Die Dosierung kann z. B. über graduierte Tropftrichter oder mittels einer Kolbendosierpumpe oder einer anderen maschinellen Dosiervorrichtung vorgenommen

werden.

Im übrigen gilt das, was über die einzuhaltenden Temperaturbereiche und über die Aufarbeitung bei Methode A 2/1 gesagt wurde, auch hier. Die Reaktionszeiten sind im allgemeinen, wie sie auch bei Methode A 2/1 angegeben werden. Es ist jedoch auch möglich — und bei einer kontinuierlichen Ausführungsform bevorzugt — beide Komponenten in sehr kurzer Zeit (Sekunden oder Bruchteilen davon) mit einer geeigneten, maschinell betriebenen Vorrichtung zu vermischen und zur Reaktion zu bringen.

Wird mit einem Säureüberschuß gearbeitet, so wird die Aufarbeitung wie in DE-OS 2 948 419 beschrieben, durchgeführt.

Im allgemeinen ist Verfahren A gegenüber Verfahren B und C nicht bevorzugt.

Verfahren B : (thermische Behandlung)

Durch thermische Behandlung bis etwa 200 °C erfolgt die Hydrolyse der Carbamatgruppen in Aminogruppen und Salze der Kohlensäure, wobei aus den Carbamatgruppen aufweisenden Verbindungen entsprechende Polyamine entstehen. Die thermische Behandlung kann kontinuierlich und diskontinuierlich durchgeführt werden. Sie kann ohne (B/1) bzw. mit Anlegen von Vakuum (B/2) erfolgen.

In einer diskontinuierlichen Ausführungsform des erfindungsgemäßen Verfahrens, das bevorzugt im gleichen Reaktionsgefäß und im direkten Anschluß an die Herstellung der Carbamatgruppen aufweisenden Verbindungen durchgeführt wird, wird das Carbamatgruppen aufweisende Verbindungen enthaltende Reaktionsgemisch bis 360 Minuten, bevorzugt 5 bis 180 Minuten, besonders bevorzugt 30 bis 120 Minuten, mit einer 60 bis 200 °C, bevorzugt 100 bis 160 °C, heißen Wärmequelle (z. B. Dampf oder Ölbad, sowie Überleiten auf beheizte z. B. Platten oder Durchleiten durch beheizte Röhren) auf ≥ 40 °C, bevorzugt ≥ 60 °C, besonders bevorzugt ≥ 80 °C und maximal etwa 200 °C erhitzt. Besonders günstig ist der Bereich von etwa 60 bis 100 °C, bevorzugt 80 bis 100 °C, wie er sich beim Rückflußkochen überschüssigen Wassers und evtl. vorhandenen Lösungsmittels (gegebenenfalls unter Anlegen von Vakuum), einstellt. Bei dieser Wärmebehandlung kann, vor allem gegen Ende der Wärmebehandlung, etwas Kohlendioxid entweichen.

Bei dieser Wärmebehandlung entstehen Kohlensäuresalze, wie gegebenenfalls verschieden hydratisierte Carbonate und Hydrogencarbonate der eingesetzten Basen. Zum Beispiel kann Kaliumhydrogencarbonat, $KHCO_3$, entstehen.

Besteht der Lösungsmittelanteil der der im wesentlichen ohne Vakuumanlegung vorgenommenen Wärmebehandlung unterworfenen, Carbamatmischung aus Wasser oder zu einem überwiegenden Anteil aus Wasser und zu einem kleineren Anteil aus einem organischen Lösungsmittel oder zu einem geringeren Anteil aus Wasser und zu einem größeren Anteil aus einem protischen oder aprotischen im polaren oder polaren Solvens (z. B. Methanol, Dimethylformamid) mit großem Salzlösevermögen, so bleibt das Kohlensäuresalz weitgehend in Lösung.

Besteht der Lösungsmittelanteil der der Wärmebehandlung unterworfenen Carbamatmischung aus einem geringeren Anteil Wasser und einem größeren Anteil eines Lösungsmittel mit geringerem Salzlösevermögen (z. B. n-Butanol, i-Butanol, Tetrahydrofuran) so können die Kohlensäuresalze zu einem Teil bereits ausfallen und abfiltriert werden.

Im Anschluß an die Wärmebehandlung wird das Lösungsmittel abdestilliert. Dies kann bei Normaldruck oder bei einem Vakuum von z. B. 0,2 bis 950 mbar vorgenommen werden. Die Innentemperatur richtet sich nach den Siedepunkten und den Mischungsverhältnissen der verwendeten Lösungsmittel, sie beträgt bei Normaldruck vorzugsweise 80 bis 100°, bei Anlegen von Vakuum z. B. 40 bis 60 °C. Es ist zweckmäßig, bei nur noch geringen Resten flüchtiger Stoffe die Temperatur unter 100 °C zu senken und Vakuum anzulegen, z. B. 0,01 bis 6 mbar.

Es ist möglich, Reste von Wasser durch Zusatz eines mit Wasser ein Azeotrop bildenden Lösungsmittels (z. B. Toluol) und erneute Destillation unter gegebenenfalls erniedrigtem Druck zu entfernen. Von dem 20 °C oder wärmeren, bevorzugt 60 bis 90 °C warmen, flüssigen Polyamin-haltigen Destillationsrückstand wird das Kohlensäuresalz z. B. durch Filtration, Zentrifugieren, Abdekantieren oder ähnlichen Maßnahmen abgetrennt. Vorzugsweise erfolgt die Abtrennung mit einer gegebenenfalls beheizbaren Drucknutsche bei z. B. etwa 0,5 bis 4 bar Überdruck.

Es ist in vielen Fällen auch möglich und zweckmäßig, eine nach der Wärmebehandlung erfolgende Phasentrennung in eine organisch Phase (enthält das Amin) und anorganische Phase (enthält Salze und Wasser) auszunutzen und die wäßrige Phase vor der organischen Phase abzutrennen. Dabei muß bei der anschließenden Destillation der Amin-Phase weniger Lösungsmittel (im allgemeinen Wasser) abdestilliert werden, daneben ist der abzufilternde Salzanteil geringer, was sich günstig auf die Filtrierzeit auswirkt.

Wenn gewünscht, kann der Filterrückstand, gegebenenfalls nach Vereinigung mit weiteren Filterrückständen gleicher Art, mit einem geeigneten Lösungsmittel, welches das Amin löst und das Kohlensäuresalz nicht löst, zur Gewinnung geringer Restmengen an Aminprodukt extrahiert werden. Geeignete Lösungsmittel sind etwa die halogenierten, insbesondere chlorierten Alkane wie z. B. Trichlormethan und flüssige aromatische Kohlenwasserstoffe wie z. B. Toluol.

Die diskontinuierliche Ausführungsform des erfindungsgemäßen Verfahrens B kann auch in verschieden modifizierter Weise durchgeführt werden.

So ist es möglich und auch bevorzugt, obige Wärmebehandlung der Carbamatzerlegung unter Bedingungen durchzuführen, bei denen Wasser und etwaige weitere Lösungsmittel abdestillieren. Das carbamathaltige Reaktionsgemisch wird etwa 30 bis 480 Minuten mit einer 60 bis 200 °C, bevorzugt 100 bis 160 °C heißen Wärmequelle auf ≥ 40 °C, bevorzugt ≥ 60 °C und besonders ≥ 80 °C erhitzt, so daß das Lösungsmittel während der thermischen Behandlung abdestilliert. Diese gleichzeitige Wärmebehandlung und Destillation kann gegebenenfalls auch unter vermindertem Druck, z. B. bei 200 bis 950 mbar, vorgenommen werden (Verfahrensart B/2). Dabei kann so verfahren werden, daß die Druckminderung allmählich und kontinuierlich erfolgt. So kann die Destillation bei Normaldruck begonnen und bei etwa 0,5 mbar beendet werden.

Eine weitere Modifikation besteht darin, daß vor der Trennung Polyamin/Kohlensäuresalz ein Lösungsmittel zugegeben wird. Dies kann dann angebracht sein, wenn die Viskosität des abzusaugenden Gemischs zu hoch ist, wenn die ausgefallene Kohlensäuresalze zu feinkristallin sind und wenn die Kohlensäuresalzfällung unvollständig ist. Geeignete Lösungsmittel sind z. B. Ether wie Dioxan, niedere Alkane wie Pentan, Hexan, Chlorkohlenwasserstoffe wie Dichlormethan, Trichlorethan, niedere Aromaten wie Toluol und Xylole. Nach der z. B. filtrativen Trennung von Salz und Amin wird das verwendete Lösungsmittel aus der Aminlösung abdestilliert. Vorteilhafterweise wird ein Lösungsmittel verwendet, das etwaiges restliches Wasser azeotrop zu entfernen vermag, z. B. Toluol.

Eine weitere Modifikation besteht darin, daß vor oder während der thermischen Behandlung der Carbamatmischung unterschüssige Mengen an Säure, bezogen auf eingesetzte Basenäquivalente, z. B. 0,01 bis 0,99 äquivalente Säure, bezogen auf 1 Äquivalent an zugesetzten basischen Verbindungen, mit dieser Reaktionsmischung vermischt werden. Geeignete Säuren sind z. B. Schwefelsäure, Salzsäure, Phosphorsäure und andere, unter den Reaktionsbedingungen nicht oxidierende Säuren, ferner starke organische Säuren wie z. B. Ameisensäure, Chloressigsäure oder Essigsäure oder andere Säuren, vorzugsweise mit einer Säurestärke, die mindestens der von Essigsäure entspricht, sowie z. B. saure Ionenaustauscherharze.

Nach dem Abdestillieren des Lösungsmittels wird ein Gemisch aus Kohlensäuresalz und z. B. dem Sulfat, Hydrogensulfat, Chlorid, einem Phosphorsäuresalz etc. abfiltriert. Selbstverständlich können auch hier Temperaturen und Druck in den oben angegebenen Grenzen variiert werden und es kann vor der Abtrennung ein geeignetes Lösungsmittel zugegeben werden.

Bevorzugt kann vor oder zu Beginn der thermischen Behandlung Kohlendioxid eingeleitet werden. Dies empfiehlt sich besonders dann, wenn ein Base/NCO-Verhältnis von ≥ 1 Verwendung gefunden hat. Überschüssige Base wird dabei in ein Salz der Kohlensäure umgewandelt. Sonst wird wie oben angegeben vorgegangen.

In einer weiteren Modifikation kann, bevorzugt vor der Thermobehandlung, eine Verbindung zugegeben werden, die mit Basen in einem weitgehend wasserfreien Medium schwerlösliche Salze ergibt. Diese Methode kann bei der Herstellung von Verfahrensprodukten, welche Löslichkeit für gegebenenfalls wasserhaltige Salze der Kohlensäure aufweisen und die nur geringe Löslichkeit in den Lösungsmitteln haben, von Vorteil sein. Als geeignete Verbindungen, die mit Basen Salze ergeben, sind Carbonsäureester bevorzugt, z. B. Methyl- oder Ethylester der Ameisen-, Essig-, Propion- oder Benzoesäure. Sie werden vorzugsweise in solchen Mengen eingesetzt, daß alle Hydroxidionen eine reaktionsbereite Verbindung, wie z. B. eine Estergruppen tragende Verbindung, treffen; ein kleiner Überschuß ist bevorzugt, doch kann auch ein größerer Überschuß verwendet werden. Die Bedingungen der Wärmebehandlung und die Aufarbeitung folgen den oben angeführten Wegen. Zusätzlich zu den Salzen der Kohlensäure werden hier z. B. (bei der Verwendung von Essigsäureestern) Acetate ausgefällt und bei der Aufarbeitung wird die Alkoholkomponente mit abdestilliert.

Eine kontinuierliche Verfahrensweise ist mit allen vorgenannten Behandlungsmethoden und ihren Modifikationen durchführbar. Vorzugsweise erfolgt eine kontinuierliche Gewinnung des Polyamins durch thermische Behandlung des Carbamatgruppen aufweisende Verbindungen enthaltenden Reaktionsgemischs im Anschluß an eine kontinuierlich vorgenommene Herstellung des besagten Reaktionsgemisches.

Die kontinuierliche Verfahrensweise besteht im Prinzip darin, daß das besagte Reaktionsgemisch, das gegebenenfalls durch Zusatz von Verdünnern fließfähig gemacht wird, über eine Heizstrecke geführt wird. Temperatur der Heizstrecke und ihre Dimensionierung bestimmen die notwendige Dauer der Wärmeeinwirkung. Die Temperatur der Heizstrecke wird so gewählt, daß eine, zumindest teilweise, bevorzugt vollständige Verdampfung der Lösungsmittel erfolgt. Dabei kann gegebenenfalls auch unter vermindertem Druck, z. B. 0,5 bis 950 mbar, bevorzugt 100 bis 800 mbar, gearbeitet werden. Die Temperatur der Heizstrecke liegt zwischen 60 und 200 °C, bevorzugt zwischen 100 und 160 °C. Sie kann an verschiedenen Punkten der Heizstrecke unterschiedlich sein, jedoch sollte eine Erwärmung des zu zerlegenden Carbamatgemisches auf über 200 °C möglichst nicht erfolgen. Eine einfache Auslegung einer solchen Heizstrecke ist z. B. ein Dünnschichtverdampfer.

Sofern die Heizstrecke nicht Filtereinrichtungen integriert oder andere Vorkehrungen zur Abtrennung der Salzanteile enthält, wird das resultierende Amin/Salz-Gemisch nach bekannten Methoden getrennt, wie sie bei der Beschreibung der diskontinuierlichen Arbeitsweise geschildert wurden.

Verfahren C (Extraktion mit Lösungsmitteln)

Die Carbamatgruppen aufweisenden Verbindungen lassen sich auch durch Behandlung der Carbamatmischung mit einem geeigneten Lösungsmittel in die entsprechenden Aminogruppen aufweisenden Verbindungen (Polyamine der Erfindung) umwandeln.

Für diese Verfahrensmethodik geeignete, mit Wasser nicht mischbare organische Lösungsmittel sind besonders solche Lösungsmittel, welche Nichtlöser für die Carbamatgruppen enthaltenden Verbindungen, sowie für die entstehenden kohlensauren Salze sind und andererseits gute Lösemittel für die entstehenden Amine darstellen. Solche Lösungsmittel sind z. B. Dichlormethan, Trichlormethan, Tetrachlormethan, Cyclohexan, Methylcyclohexan, Pentan, Hexan, Benzol und Toluol. Besonders geeignet ist Dichlormethan.

Auf 100 Teile Wasser in der Carbamatmischung werden z. B. 10 bis 1 000 Teile des besagten Lösungsmittels, bevorzugt 20 bis 500, besonders bevorzugt 80 bis 150 Teile, verwendet. Die Behandlung wird bevorzugt bei 20 bis 40 °C durchgeführt, doch kann die Methode auch bei höherer Temperatur, aber höchstens bei der Temperatur, die der Siedetemperatur des verwendeten Lösungsmittels entspricht, durchgeführt werden. Die erforderliche Behandlungs- und Extraktionsdauer beträgt im allgemeinen bei Raumtemperatur etwa 1 Stunde bis 3 Tage, bevorzugt 2 Stunden bis 1 Tag, sie verkürzt sich bei erhöhter Behandlungstemperatur. Das Ende der Reaktion ist daran zu erkennen, daß die wäßrige und die organische Phase optisch klar sind und die organische Phase auf Säurezusatz (vorher wird zur Homogenisierung der Phasen z. B. Ethanol zugesetzt) nicht mehr aufschäumt. Zweckmäßig wird während der Behandlung gerührt. Nach beendeter Reaktion werden die beiden Phasen voneinander mechanisch getrennt und die organische Phase durch Destillation vom organischen Lösungsmittel befreit. Restliche Mengen flüchtiger Stoffe werden bei z. B. 0,1 mbar/100 °C entfernt.

Im Prinzip verwendbar sind jedoch auch wassermischbare Lösungsmittel, wenn sie zumindest schlechtere Lösemittel für Salze der Kohlensäure sind als Wasser. Solche Lösemittel sind etwa Methanol, Ethanol, n-Propanol, i-Propanol, n-Butanol, i-Amylalkohol, cyclische Ether wie Dioxan oder Tetrahydrofuran, wasserlösliche acyclische Ether wie Diethylenglykoldimethylether oder Ketone wie Aceton, Methylethylketon und andere. Auch hier wird nach Umwandlung der Carbamatgruppen enthaltenden Verbindung in ein Polyamin ein Zweiphasensystem erhalten. Dabei ist in der wäßrigen Phase das Kohlensäuresalz und in der organischen Phase das Amin angereichert ; wegen der gegenseitigen Mischbarkeit befinden sich jedoch in der wäßrigen Phase Anteile des organischen Lösungsmittels und des Amins, während die organische Phase anteilsmäßig Salze und Wasser enthält, so daß die organische Phase nach Abdestillieren des Lösungsmittels noch einmal filtriert werden muß.

Es ist auch möglich, ein Gemisch mehrerer organischer Lösungsmittel zu verwenden. Bevorzugt werden die Lösungsmittel daher so ausgewählt, daß mindestens ein Lösungsmittel bevorzugt neben dem Amin auch die Carbamatgruppen aufweisende Verbindung löst, während das mindestens eine andere Lösungsmittel bevorzugt nur das Amin löst. Für das erste Lösungsmittel sind z. B. niedere Alkohole, für das zweite Lösungsmittel z. B. chlorierte aliphatische Kohlenwasserstoffe brauchbar.

Die Extraktion kann bei Normaldruck, bei vermindertem bzw. bei Überdruck vorgenommen werden, bevorzugt ist das Arbeiten bei Normaldruck.

Auch das Extraktionsverfahren kann dadurch modifiziert werden, daß vor oder während der Extraktion die Carbamatmischung mit unterschüssigen Äquivalenten an Säuren, bezogen auf die eingesetzte Basenmenge, das heißt etwa 0,01 bis 0,99 Äquivalente Säure pro 1 Äquivalent an Basen, vermischt werden. Besonders geeignet ist diese Modifizierung immer dann, ebenso wie die Einleitung von Kohlendioxid, wenn ein Base/NCO-Verhältnis von größer 1:1 Verwendung gefunden hat. Auch die üblichen Modifizierungen des Verfahrens B können hier sinngemäß übernommen werden.

Für dieses diskontinuierlich auszuführende Extraktionsverfahren eignen sich laborübliche Vorrichtungen, z. B. Rühren des Gemischs mit den Extraktionslösungsmitteln in einem Kolben, bis optisch klare Phasen entstehen und anschließende Überführung und Separierung der Phasen in einem Scheidetrichter. Verwendbar sind aber auch übliche Extraktoren für flüssig/flüssig-Gemische, wie sie für die Verwendung von spezifisch schwereren oder leichteren Extraktionsmitteln im Vergleich mit dem Extraktionsgut, angeboten werden. Die Extraktion kann somit auch kontinuierlich durchgeführt werden. Verwendet man z. B. ein Lösungsmittel, das die Carbamatgruppen aufweisenden Verbindungen nicht löst und mit dem Polyamin eine spezifisch leichtere Phase bildet, so kann beispielsweise folgendermaßen vorgegangen werden :

Ein Gefäß wird kontinuierlich mit einer Carbamatmischung beschickt. Unter Rühren wird ein wie oben definiertes Lösungsmittel von unten eingebracht, das das freie Amin löst, über einen z. B. Überlauf aus dem Extraktor entfernt, durch Destillation vom Amin befreit und wieder in den Extraktor eingebracht. Die spezifisch schwerere, z. B. wäßrige Salzlösung, wird unten abgelassen und mit Natriumhydroxid versetzt und vom daraufhin kristallisierenden Kohlensäuresalz befreit und im Kreislauf wieder zur Umsetzung mit den NCO-Verbindungen eingesetzt.

Aus den organischen Aminlösungen kann das Amin sowohl nach der kontinuierlichen als auch diskontinuierlichen Verfahrensweise leicht durch gegebenenfalls unter vermindertem Druck ausgeführte Destillation der Lösungsmittel rein erhalten werden.

Dies ist in vielen Fällen jedoch nicht nötig, da für eine ganze Reihe von Anwendungszwecken, z. B. Herstellung von Beschichtungen von textilen Geweben, Leder und anderen Flächengebilden, Amine als

Lösung in einem organischen Lösungsmittel verwendet werden. In solchen Fällen wird zweckmäßigerweise ein solches Lösungsmittel verwendet, wie es auch für die anwendungstechnischen Zwecke der angeschlossenen Verwendung zum Aufbau hochmolekularer Polyurethan (harnstoff)e sinnvoll ist.

Zusammengefaßt werden die wichtigsten Verfahrensmethoden zur Aufarbeitung der Carbamatgemische zu den (modifizierten) Polyaminen nochmals gekennzeichnet :

Aufarbeitung der Carbamat-Reaktionsmischung durch :

1. Zugabe ⩾ 1 Äquivalent eines Protonendonators, bezogen auf Menge an Base in Stufe I, und Auswahl des Protonendonators aus der Gruppe der Mineralsäuren, organischen Säuren und in einem unlöslichen polymeren Skelett fixierten Säuren, sowie gegebenenfalls Neutralisation überschüssiger Säuremengen ;
oder
2. Zerlegung des Carbamats bei Temperaturen bis zu 200 °C, gegebenenfalls in Gegenwart von Lösungsmitteln und unter Anlegung eines Vakuums ;
oder
3. Extraktion der Carbamat-Verbindung mit einem mit Wasser nicht mischbaren organischen Lösungsmittel ;
oder
4. Behandlung vor oder während der Isolierungsschritte zur Gewinnung des Polyamins aus der Carbamatgruppe enthaltenden Verbindung mit einer unteräquivalenten Menge von 0,01 bis 0,99 Äquivalenten (bezogen auf die eingesetzte Menge an Base in der Hydrolysenstufe) eines Protonendonators ; und
5. Abtrennung des Polyamins durch Phasentrennung, Kristallisieren oder Extrahieren (gegebenenfalls plus Abdestillieren von Lösungsmitteln) in allen vorbeschriebenen Fällen.

Die nach Entfernung der Lösungsmittel erfindungsgemäß erhaltenen Polyamine stellen im allgemeinen farblose bis schwach gefärbte, mittelviskose bis hochviskose und gegebenenfalls höherschmelzende Produkte dar.

Die erfindungsgemäß erhaltenen Polyamine werden wegen ihres niedrigen Dampfdrucks vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399 und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfs- und Zusatzstoffe. Die Anwendung der erfindungsgemäß hergestellten Polyamine kann z. B. für Elastomere, Beschichtungen, Fäden in der Applikation aus Schmelzen, Lösungen, Dispersionen oder als Reaktivkomponentenmischung erfolgen. Weitere Verwendungszwecke der nach dem erfindungsgemäßen Verfahren hergestellten Polyamine sind z. B. Kupplungskomponenten für Diazofarbstoffe, Härter für Epoxid- und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## Beispiele

Beispiele 1-6 : Versuche zur erfindungsgemäßen Verringerung des Gehalts an niedermolekularem Amin in Polyamin (Beispiele 1-4 sind Vergleichsbeispiele).

### Beispiel 1 (Vergleichsbeispiel)

1.1. Herstellung des NCO-Prepolymers

Aus 600 g eines Polypropylenglykols der durchschnittlichen Mol.-masse 2 000, 4.05 g Butandiol-1.4 und 104 g 2,4-Toluylendiisocyanat wird auf bekannte Art ein NCO-Prepolymer hergestellt. Das Äquivalent-Verhältnis zwischen NCO-Gruppen, Polypropylenglykol-OH-Gruppen und Butandiol-OH-Gruppen beträgt 2:1:0,15. Das NCO-Prepolymer weist einen NCO-Gehalt von 3.2 % (th. 3.03 %) auf.

1.2. Herstellung der Carbamat-Mischung

Vorgelegt wird eine Mischung aus 51.2 g 50 %iger Kalilauge (0.457 mol KOH), 475 ml Wasser und

0.5 g Mersolat® H. Innerhalb 30 min. werden 500 g des auf 60 °C erwärmten Prepolymers aus 1.1 bei einer Innentemperatur von 18-22 °C zugegeben. 30 min. wird bei dieser Temperatur nachgerührt. Das NCO:$OH^{\ominus}$-Äquivalentverhältnis beträgt 1:1.2.

1.3. Herstellung des Polyamins

Die Carbamatmischung aus 1.2 wird 45 min. bei einer Bad-Temperatur von 150 °C unter Rückfluß gerührt, anschließend im Wasserstrahlpumpenvakuum bei einer Bad-Temperatur von 150 °C (zu Beginn der Destillation) bis 100 °C (gegen Ende der Destillation) und dann bei 0.13 mbar/100 °C das Wasser abdestilliert. Der Rückstand wird mit 350 ml Toluol aufgenommen und das Kohlensäuresalz abgesaugt. Das toluolische Filtrat wird bei 100 °C/20 mbar und dann 100 °C/0.13 mbar vom Lösungsmittel befreit. Daten in Tabelle 1.

Beispiel 2 (Vergleichsbeispiel)

2.1. Herstellung des NCO-Prepolymers

Aus 600 g eines Polypropylenglykols der durchschnittlichen Molmasse 2 000 und 104 g 2.4-Toluylendiisocyanat (NCO:OH-Äquivalentverhältnis 2:1) wird durch 3-stündiges Erhitzen auf 80 °C ein NCO-Prepolymer hergestellt. Zu diesem NCO-Prepolymer werden 4.05 g Butandiol-1.4 zugegeben und eine weitere Stunde bei 80 °C gehalten. Das Äquivalentverhältnis zwischen NCO-Gruppen, Polypropylenglykol-OH-Gruppen und Butandiol-1.4-OH-Gruppen beträgt 2:1:0.15. Das NCO-Prepolymer weist einen NCO-Gehalt von 3.03 % (th. 3.03 %) auf.

2.2. Herstellung der Carbamatmischung

Vorgelegt wird eine Mischung aus 48.4 g 50 %iger Kalilauge (0.432 mol KOH), 475 ml Wasser und 0,5 g Mersolat® H. Innerhalb 30 min. werden unter Rühren 500 g des auf 60 °C erwärmten NCO-Prepolymers aus 1.1 bei einer Innentemperatur von 18-22 °C zugegeben. Bei dieser Temperatur 30 min. nachgerührt. Das NCO:$OH^{\ominus}$-Äquivalent-Verhältnis beträgt 1:1.2.

2.3. Herstellung des Polyamins

Die Carbamatmischung aus 2.2 wird 45 min. bei einer Bad-Temperatur von 150 °C unter Rückfluß gerührt, anschließend im Wasserstrahlpumpenvakuum bei einer Bad-Temperatur von 150 °C (zu Beginn der Destillation) bis 100 °C (gegen Ende der Destillation) und dann bei 0.13 mbar/100 °C das Wasser abdestilliert. Aus dem 80 °C warmen Reaktionsprodukt wird das Kohlensäuresalz durch Absaugen abgetrennt. Daten in Tabelle 1.

Beispiel 3 (Vergleichsbeispiel)

3.1. Herstellung des NCO-Prepolymers

Aus 600 g eines Polypropylenglykols der durchschnittlichen Mol.-masse 2 000 und 104 g 2.4-Toluylendiisocyanat wird durch 3-stündiges Erhitzen auf 80 °C ein NCO-Prepolymer mit einem NCO-Gehalt von 3.45 % (th. 3.58 %) hergestellt. Das Äquivalentverhältnis zwischen NCO- und OH-Gruppen beträgt 1:1.

3.2. Herstellung der Carbamatmischung

Vorgelegt wird eine Mischung aus 51.2 g 50 %ige Kalilauge (0,457 mol), 475 ml Wasser und 0,5 g Mersolat® H. Unter Rühren werden innerhalb 30 min. 500 g des auf 60 °C erwärmten NCO-Prepolymers aus 3.1 bei einer Innentemperatur von 18-22 °C zugegeben. Bei dieser Temperatur wird 30 min. nachgerührt. Das NCO:$OH^{\ominus}$-Verhältnis beträgt 1:1.2.

3.3. Herstellung des Polyamins

Die Herstellung des Polyamins wurde wie in Beispiel 2.3. vorgenommen. Daten in Tabelle 1.

Beispiel 4 (Vergleichsbeispiel)

4.1. Herstellung der Carbamatmischung

Vorgelegt wird eine Mischung aus 57,6 g 50 %iger Kalilauge (0,514 mol), 475 ml Wasser und 0,5 g Mersolat® H. Unter Rühren werden innerhalb 30 min. 500 g eines 60 °C warmen, aus Polypropylenglykol

der durchschnittlichen Mol.-masse 2 000 und überschüssigem 2.4-Toluylendiisocyanat hergestellten, einen NCO-Wert von 3.6 % (th. 3.58 %) aufweisenden, gedünnschichteten NCO-Prepolymers bei einer Innentemperatur von 18-22 °C zugegeben. Das NCO:OH$^{\ominus}$-Äquivalentverhältnis beträgt 1:1,2.

4.2. Herstellung des Polyamins

Die Herstellung des Polyamins wurde wie in Beispiel 2.3. vorgenommen. Daten in Tabelle 1.

Beispiel 5 (erfindungsgemäß)

5.1. Herstellung des NCO-Prepolymers

Es wird das NCO-Prepolymer aus Beispiel 3.1. verwendet.

5.2. Herstellung der Carbamatmischung

Vorgelegt wird eine Mischung aus 55 g 50 %iger Kalilauge (0,491 mol), 2.86 g Butandiol-1.4 (0.032 mol), 475 ml Wasser und 0.5 g Mersolat® H. Unter Rühren werden innerhalb 30 min. 500 g des auf 60 °C erwärmten NCO-Prepolymers aus 5.1 bei einer Innentemperatur von 18-22 °C zugegeben. 30 min. wird nachgerührt. Das NCO:OH$^{\ominus}$-Äquivalentverhältnis beträgt 1:1.2, das OH/OH$^{\ominus}$-Äquivalentverhältnis 1:0.13.

5.3. Herstellung des Polyamins

Die Herstellung des Polyamins wurde wie in Beispiel 2.3. vorgenommen. Daten in Tabelle 1.

Beispiel 6 (erfindungsgemäß)

6.1. Herstellung des NCO-Prepolymers

Es wird das NCO-Prepolymer aus Beispiel 3.1. verwendet.

6.2. Herstellung der Carbamatmischung

Vorgelegt wird eine Mischung aus 45.92 g 50 %iger Kalilauge (0,41 mol KOH), 2.86 g Butandiol-1.4 (0.032 mol), 475 ml Wasser und 0,5 g Mersolat® H. Unter Rühren werden innerhalb 30 min. 500 g des auf 60 °C erwärmten NCO-Prepolymers aus 6.1. bei einer Innentemperatur von 18-22 °C zugegeben. 30 min. wird nachgerührt. Das NCO:OH$^{\ominus}$-Äquivalentverhältnis beträgt 1:1, die Butandiol-Menge ist so bemessen, daß sie der in 500 g NCO-Prepolymer gemäß Beispiel 1 und 2 enthaltenen Butandiol-1.4-Menge entspricht.

6.3. Herstellung des Polyamins

Die Herstellung des Polyamins wird wie in Beispiel 2.3. vorgenommen. Daten in Tabelle 1.

(Siehe Tabelle 1 Seite 21 f.)

Beispiel 7, 8, 9 und 10 : Diol-Modifizierung der Polyamine in Abhängigkeit von NCO/Basen-Verhältnis

Beispiel 7 (erfindungsgemäß)

7.1. Herstellung des NCO-Prepolymers

Aus 600 g eines Polypropylenglykols mit einer durchschnittlichen Molmasse 2 000 und 104 g 2,4-Toluylendiisocyanat wird durch 3-stündiges Erhitzen auf 80 °C ein einen NCO-Wert von 3.4 % aufweisendes NCO-Prepolymer hergestellt.

7.2. Herstellung der Carbamatmischung

Vorgelegt wird eine Mischung aus 45,4 g 50 %iger Kalilauge (0,404 mol KOH), 2.7 g Butandiol-1.4 (0,03 mol), 480 ml Wasser und 0,5 g Mersolat® H. Unter intensivem Rühren werden innerhalb 30 min. 500 g des auf 65 °C erwärmten NCO-Prepolymers aus 7.1. bei einer Innentemperatur von 17-20 °C zugegeben. Bei dieser Temperatur wird 30 min. nachgerührt. Das Äquivalentverhältnis zwischen NCO-Gruppen, Hydroxidgruppen und Butandiol-1,4-OH-Gruppen beträgt 1:1:0.15.

Tabelle 1

| | Beispiel 1 | Beispiel 2 | Beispiel 3 | Beispiel 4 | Beispiel 5 | Beispiel 6 |
|---|---|---|---|---|---|---|
| | | (Vergleichsbeispiele 1-4) | | | (erfindungsgemäß) | |
| Ausbeute (%) | 97 | 88 | 98 | 98 | 99 | 94 |
| NH-Zahl (mg KOH/g) [1] | 44.2 | 47.0 | 44.2 | 49.8 | 54.6 | 45.1 |
| Säure-Zahl (mg KOH/g) [1] | 0.3 | 0.05 | 0.05 | 0.05 | 0.05 | 0.05 |
| Mol.-masse [2] | 2600 | 2400 | 27[illegible] | 2300 | 2100 | 2600 |
| Viskosität $\eta$75°C (mPa. s) [3] | – [8] | 443 | 417 | 294 | 316 | 394 |
| primärer Stickstoff (%) [4] | 0.89 | 1.01 | 1.07 | 1.21 | 1.11 | 0.99 |
| Gesamt-Stickstoff (%) | 2.44 | 2.47 | 2.43 | 2.59 | 2.46 | 2.50 |
| Toluylen-2.4-diamin-Gehalt (%) [6] | 0.077 | 0.113 | 0.74 | 0.27 | 0.450 | 0.207 |
| Wasser-Gehalt (%) [7] | 0.04 | 0.11 | 0.07 | 0.07 | 0.10 | 0.09 |

[1]) Acetylierung mit Acetanhydrid und Titrierung der freien Essigsäure
[2]) dampfdruckkosmometrisch
[3]) rotationsviskosimetrisch
[4]) Titration mit $HClO_4$
[5]) Bestimmung nach Kjeldahl
[6]) bestimmt mit Hochdruckflüssigkeitschromatographie (HPLC)
[7]) nach Karl Fischer
[8]) strukturviskos, $\eta^{75}$ bei $\tau_{2.5}$ : 2 500 mPa.s, bei $\tau_{50}$ : 1 500 mPa.s

7.3. Herstellung des Polyamins

Die Herstellung des Polyamins wird wie in Beispiel 2.3. vorgenommen. Daten in Tabelle 2.

Beispiel 8 (Vergleichbeispiel)

8.1. Herstellung des NCO-Prepolymers

Es wird das gleiche NCO-Prepolymer wie in 7.1 verwendet.

8.2. Herstellung der Carbamatmischung

Vorgelegt wird eine Mischung aus 45,4 g 50 %iger Kalilauge (0,404 mol), 480 g Wasser und 0,5 g Mersolat® H. Unter intensivem Rühren werden innerhalb 30 min. 500 g des auf 65 °C erwärmten NCO-Prepolymers aus 8.1 bei einer Innentemperatur von 17-20 °C zugegeben. Bei dieser Temperatur wird 30 min. nachgerührt. Das Äquivalentverhältnis zwischen NCO-Gruppen und $OH^{\ominus}$-Gruppen beträgt 1:1.

8.3. Herstellung des Polyamins

Die Herstellung des Polyamins wird wie in Beispiel 2.3. vorgenommen. Daten in Tabelle 2. Beispiel 8 ist auch Vergleichsbeispiel für Beispiel 11.

Beispiel 9 (erfindungsgemäß)

9.1. Herstellung des NCO-Prepolymers

Es wird das gleiche NCO-Prepolymer wie in Beispiel 7.1 verwendet.

9.2. Herstellung der Carbamat-Mischung

Vorgelegt wird eine Mischung aus 61,2 g 50 %iger Kalilauge (0,546 mol), 2,7 g Butandiol-1.4, 470 ml Wasser und 0,5 g Mersolat® H. Innerhalb 30 min. werden 500 g des auf 65 °C erwärmten NCO-Prepolymers aus 9.1 bei einer Innentemperatur von 17-20 °C zugegeben. 30 min. wird bei dieser Temperatur nachgerührt. Das Äquivalentverhältnis zwischen NCO-Gruppen, $OH^{\ominus}$-Gruppen und Butandiol-1,4-OH-Gruppen beträgt 1:1.35:0.15.

9.3. Herstellung des Polyamins

Die Herstellung des Polyamins wird wie in Beispiel 2.3. vorgenommen. Daten in Tabelle 2.

Beispiel 10 (Vergleichsbeispiel)

10.1. Herstellung des NCO-Prepolymers

Es wird das gleiche NCO-Prepolymer wie in Beispiel 7.1. verwendet.

10.2. Herstellung der Carbamat-Mischung

Vorgelegt wird eine Mischung aus 61,2 g 50 %iger Kalilauge (0,546 mol KOH), 470 ml Wasser und 0,5 g Mersolat® H. Innerhalb 30 min. werden 500 g des auf 65 °C erwärmten NCO-Prepolymers aus 10.1 bei einer Innentemperatur von 17-20 °C zugegeben. 30 min. wird bei dieser Temperatur nachgerührt. Das Äquivalentverhältnis zwischen NCO-Gruppen und $OH^{\ominus}$-Gruppen beträgt 1:1.35.

10.3. Herstellung des Polyamins

Die Herstellung des Polyamins wird wie in Beispiel 2.3 vorgenommen. Daten in Tabelle 2.

(Siehe Tabelle 2 Seite 23 f.)

Tabelle 2

| | Beispiel 7 (erfindungsgemäß) | Beispiel 8 (Vergleich) | Beispiel 9 (erfindungsgemäß) | Beispiel 10 (Vergleich) |
|---|---|---|---|---|
| Ausbeute (%) | 95 | 95 | 99 | 94 |
| NH-Zahl (mg KOH/g) [1)] | 27.8 | 31.6 | 43.4 | 48.4 |
| Säure-Zahl (mg KOH/g) [1)] | 0.4 | 0.4 | 0.4 | 0.3 |
| Mol.-masse [2)] | 4200 | 3900 | 2600 | 2600 |
| Viskosität $75°C_{(mPa.s)}$ [3)] | Paste | 2050 | 509 | 390 |
| primärer Stickstoff (%) [4)] | 0.54 | 0.70 | 1.0 | 1.10 |
| Gesamt-Stickstoff (%) [5)] | 2.44 | 2.47 | 2.46 | 2.46 |
| Wassergehalt (%) [7)] | 0.2 | 0.02 | 0.04 | 0.08 |

(Indices siehe Tabelle 1.)

Beispiel 11 (erfindungsgemäß)

11.1. Herstellung des NCO-Prepolymers

Es wird das NCO-Prepolymer aus Beispiel 7.1. verwendet.

11.2. Herstellung der Carbamatmischung

Vorgelegt wird eine Mischung aus 45,4 g 50 %iger Kalilauge (0,405 mol), 480 ml Wasser, 4,8 g Trimethylhexandiol (0,03 mol) und 0,5 g Mersolat® H. Unter Rühren werden innerhalb 30 min. 500 g des auf 50 °C erwärmten NCO-Prepolymers aus 11.1. bei einer Innentemperatur von 22-26 °C zugegeben. Bei dieser Innentemperatur wird 30 min. nachgerührt. Das Äquivalentverhältnis zwischen NCO-Gruppen, $OH^{\ominus}$-Gruppen und Trimethylhexandiol-OH-Gruppen beträgt 1:1:0,15.

11.3. Herstellung des Polyamins

Obige Carbamatmischung wird mit 750 ml Methanol versetzt. Unter Rühren werden in 15 min. 230 g feuchtes Lewatit® SC 108 hinzugegeben und 3 h bei 50-55 °C gehalten. Die Reaktionsmischung wird heiß abgesaugt, der Filterrückstand mit 350 ml Methanol nachgewaschen und Filtrat mit Waschflüssigkeit vereinigt. Die flüchtigen Bestandteile werden zuerst bei 100 °C/20 mbar und dann 100 °C/0,13 mbar abdestilliert.

Produktdaten :

| | |
|---|---|
| Ausbeute (%) | 97 |
| NH-Zahl (mg KOH/g) [1] | 40.5 |
| Säure-Zahl (mg KOH/g) [1] | 0.2 |
| Mol.-masse [2] | 2 700 |
| Viskosität 75 °C (mPas) [3] | 744 |
| primärer Stickstoff (%) [4] | 2.42 |
| Gesamt-Stickstoff (%) [5] | 0.90 |
| Wassergehalt (%) [7] | 0.04 |

(Indices siehe Tabelle 1)

Beispiel 12. (erfindungsgemäß)

12.1. Herstellung des NCO-Prepolymers

Es wird ein aus Toluylen-2.4-diisocyanat und einem Polypropylenglykolether der durchschnittlichen Mol.-masse 2 000 hergestelltes und einen NCO-Gehalt von 3.8 % aufweisendes NCO-Prepolymer verwendet.

12.2 Herstellung des Carbamatmischung

Vorgelegt wird eine Mischung aus 68,3 g 50 %iger Kalilauge (0,61 mol KOH), 470 ml Wasser, 5.4 g Trimethylhexandiol (33.9 mmol) und 0,5 g Mersolat® H. Unter Rühren werden innerhalb 40 min. 500 g des auf 50 °C erwärmten NCO-Prepolymers aus 12.1 bei einer Innentemperatur von 22-26 °C zugegeben. Bei dieser Temperatur wird 30 min. nachgerührt. Das Äquivalentverhältnis zwischen NCO-Gruppen, $OH^{\ominus}$-Gruppen und Trimethylhexandiol-OH-Gruppen beträgt 1 : 1.35 : 0.15.

12.3. Herstellung des Polyamins

Die Herstellung des Polyamins wird wie in Beispiel 11.3 vorgenommen.

Produktdaten :

| | |
|---|---|
| Ausbeute (%) | 98 |
| NH-Zahl (mg KOH/g) [1] | 53.5 |
| Säure-Zahl (mg KOH/g) [1] | 0.05 |
| Mol.-masse [2] | 2 200 |
| Viskosität 75 °C (mPa.s) [3] | 323 |
| primärer Stickstoff (%) [4] | 1.07 |
| Gesamt-Stickstoff (%) [5] | 2.41 |
| TDA-Gehalt (%) [6] | 0.314 |
| Wassergehalt (%) [7] | 0.04 |

1-7) siehe Tabelle 1.

Beispiel 13. (erfindungsgemäß)

13.1 Herstellung des NCO-Prepolymers

Es findet das NCO-Prepolymer aus Beispiel 7.1 Verwendung.

13.2 Herstellung der Carbamat-Mischung

Vorgelegt wird eine Mischung aus 61.2 g 50 %iger Kalilauge (0,546 mol KOH), 470 ml Wasser, 30 g eines Polypropylenglykols mit einer durchschnittlichen Molmasse 1 000 (0,33 mol), 0,5 g Mersolat® H. Unter Rühren werden innerhalb 30 min. 500 g des auf 70 °C erwärmten NCO-Prepolymers aus 13.1. bei einer Innentemperatur von 20-24 °C zugegeben. Bei dieser Innentemperatur wird 15 min. nachgerührt. Das Äquivalentverhältnis zwischen NCO-Gruppen, $OH^{\ominus}$-Gruppen und Polyetherdiol-OH-Gruppen beträgt 1 : 1.35 : 0.15.

13.3 Herstellung des Polyamins

Obige Carbamatmischung wird zur Viskositätserniedrigung mit 250 ml Methanol verdünnt und in einen geeigneten Tropftrichter gegeben. In einem anderen Tropftrichter werden 26.75 g Schwefelsäure auf ein Volumen von 250 ml Wasser verdünnt. Innerhalb 20 min. werden Carbamat- und Säurekomponente so in einen 150 ml Wasser als Rührmasse enthaltenden Reaktionsraum gegeben, daß pro Zeiteinheit gleiche Äquivalente an Säure und Base (Carbamat + überschüssiges Kaliumhydroxid) zusammentreffen.

13.3.1.

Ein Teil der Polyamin-Reaktionsmischung wird bei 100 °C/20 mbar und dann 100 °C/0,13 mbar von den flüchtigen Komponenten befreit, der Salzanteil wird filtrativ abgetrennt.

13.3.2.

Der andere Teil der Polyamin-Reaktionsmischung wird in einen Scheidetrichter geeigneter Dimensionierung überführt. Nach 2h wird die wäßrige Phase abgetrennt und die organische Phase durch Destillation bei 20 mbar/100 °C und dann 0,2 mbar/100 Torr von flüchtigen Bestandteilen befreit. Der geringe (im Vergleich zu 13.3.1) Salzanteil wird durch Filtration der 80 °C warmen Produktmischung abgetrennt.

| Produktdaten : | 13.3.1 | 13.3.2 |
|---|---|---|
| Ausbeute (%) | 100 | 94 |
| NH-Zahl (mg KOH/g) [1]) | 45.4 | 43.9 |
| Säure-Zahl (mg KOH/g) [1]) | 0.05 | 0.2 |
| Mol.-masse [2]) | 2 400 | 2 400 |
| Viskosität 75 °C (mPa . s) [3]) | 392 | 410 |
| Primärer Stickstoff (%) [4]) | 0.97 | 0.9 |
| Gesamt-Stickstoff (%) [5]) | 2.32 | 2.35 |
| Wassergehalt (%) [7]) | 0.03 | 0.04 |

1-5,7) siehe Tabelle 1.

Beispiel 14 : Erhöhung der Funktionalität (erfindungsgemäß)

14.1 Herstellung des NCO-Prepolymers

Es findet das NCO-Prepolymer aus Beispiel 12.1 Verwendung.

14.2 Herstellung der Carbamatmischung

Vorgelegt wird eine Mischung aus 30.22 ml 45 %iger Natronlauge (0.34 mol NaOH), 480 ml Wasser, 14.5 g eines Addukts aus Propylenoxid und Trimethylolpropan mit einer OH-Zahl von 870 (75.5 mmol) und 0.5 g Mersolat® H. Unter Rühren werden innerhalb 30 min. 500 g des auf 70 °C erwärmten NCO-Prepolymers aus 14.1. bei einer Innentemperatur von 25-30 °C zugegeben. Bei dieser Innentemperatur wird 20 min. nachgerührt. Das Äquivalentverhältnis zwischen NCO-Gruppen, $OH^{\ominus}$-Gruppen und TMP/Propylenoxid-Addukt-OH-Gruppen beträgt 6 : 4.5 : 3.

14.3. Herstellung des Polyamins

14.3.1.

Ein Teil des Carbamatmischung wird wie in 2.3 aufgearbeitet.

14.3.2.

Weitere 500 ml der Carbamatmischung werden wie folgt aufgearbeitet : In einen 2 l-Kolben werden obige 500 ml der Carbamatmischung und 750 ml einer 10 : 1-Vol.-%-Mischung aus Toluol und Ethanol vermischt und 18 h bei Raumtemperatur intensiv verrührt und anschließend in einen Scheidetrichter überführt. Nach 3-stündigem Stehen haben sich organische und wäßrige Phase soweit separiert, daß der größte Teil der wäßrigen Phase abgetrennt werden kann. Das verbliebene Extraktionsgut wird destilliert (bei 100 °C, zuerst 20 mbar, dann 0.13 mbar) und zum Schluß der Kohlensäuresalzanteil abgesaugt.

| Produktdaten : | 14.3.1 | 14.3.2 |
|---|---|---|
| Ausbeute (%) | 96 | 89 |
| NH-Zahl (mg KOH/g) [1]) | 54.1 | 48.9 |
| Säure-Zahl (mg KOH/g) [1]) | 0.2 | 0.05 |
| Mol.-masse [2]) | 2 600 | 2 600 |
| Viskosität 75 °C (mPa . s) [3]) | 1 150 | 1 090 |
| Primärer Stickstoff (%) [4]) | 0.72 | 0.69 |
| Gesamt-Stickstoff (%) [5]) | 2.38 | 2.41 |
| Wassergehalt (%) [6]) | 0.11 | 0.04 |

[1-5,7)] siehe Tabelle 1.

Beispiel 15 Erhöhung der Funktionalität (erfindungsgemäß)

15.1. Herstellung des NCO-Prepolymers

Es findet das NCO-Prepolymer aus Beispiel 12.1 Verwendung.

15.2. Herstellung der Carbamatmischung

Vorgelegt wird eine Mischung aus 38 g 50 %iger Kalilauge (0,34 mol), 480 ml Wasser, 5.8 g des TMP/PO-Addukts aus Beispiel 14.2 (0.03 mol) und 0,5 g Mersolat® H. Unter Rühren werden innerhalb 30 min. 500 g des auf 70 °C erwärmten NCO-Prepolymers aus 15.1 bei einer Innentemperatur von 25-30 °C zugegeben. Bei dieser Innentemperatur wird 20 min. nachgerührt. Das Äquivalentverhältnis zwischen NCO-Gruppen, $OH^{\ominus}$-Gruppen und TMP/PO-Addukt-OH-Gruppen beträgt 1 : 0.75 : 0.20.

15.3. Herstellung des Polyamins

Die Aufarbeitung erfolgt wie in Beispiel 2.3

| Produktdaten : | |
|---|---|
| Ausbeute (%) | 94 |
| NH-Zahl (mg KOH/g) [1)] | 33.7 |
| Säure-Zahl (mg KOH/g) [1)] | 0.2 |
| **Produktdaten (Fortsetzung) :** | |
| Mol.-masse [2)] | 3 700 |
| Viskosität 75 °C (mPa.s) [3)] | 3 170 |
| primärer Stickstoff (%) [4)] | 0.64 |
| Gesamt-Stickstoff (%) [5)] | 2.42 |
| Wassergehalt (%) [6)] | 0.07 |

[1-6)] siehe Tabelle 1

Beispiel 16 Erhöhung der Funktionalität (erfindungsgemäß)

16.1. Herstellung des NCO-Prepolymers

Es findet das NCO-Prepolymer aus Beispiel 12.1. Verwendung.

16.2. Herstellung der Carbamatmischung

Vorgelegt wird eine Mischung aus 31 g 50 %iger Kalilauge (0.34 mol), 480 ml Wasser, 11.2 g Triethanolamin (0,075 mol) und 0,5 g Mersolat® H. Unter Rühren werden innerhalb 30 min. 500 g des auf 60 °C erwärmten NCO-Prepolymers aus 16.1. bei einer Innentemperatur von 22-25 °C zugegeben. Das Äquivalentverhältnis zwischen NCO-Gruppen, $OH^{\ominus}$-Gruppen und Triethanolamin-OH-Gruppen beträgt 6 : 4.5 : 3.

16.3. Herstellung des Polyamins

Die Aufarbeitung erfolgt wie in 2.3 beschrieben.

Produktdaten :

| | |
|---|---|
| Ausbeute (%) | 96 |
| NH-Zahl (mg KOH/g) [1] | 54.4 |
| Säure-Zahl (mg KOH/g) [1] | 0.05 |
| Mol.-masse [2] | 2 500 |
| Viskosität 75 °C (mPa.s) [3] | 648 |
| primärer Stickstoff (%) [4] | 0.96 |
| Gesamt-Stickstoff (%) [5] | 2.59 |
| Wassergehalt (%) [6] | 0.05 |

(Indices siehe Tabelle 1.)

## Beispiele 17, 18

### Beispiel 17 (erfindungsgemäß)

17.1. Herstellung des NCO-Prepolymers

Aus einem auf TMP gestarteten Polypropylenoxid/Polyethylenoxid-Polyether mit vorwiegend primären OH-Gruppen der OH-Zahl 28 und 2.4-Diisocyanatotoluol wurde durch 3-stündiges Erhitzen auf 80 °C ein NCO-Prepolymer mit einem NCO-Wert von 2.1 % hergestellt.

17.2. Herstellung der Carbamatmischung

Vorgelegt wird eine Mischung aus 38 g 50 %iger Kalilauge (0,339 mol), 480 ml Wasser, 1,87 g Butandiol-1.4 (0,021 mol) und 0,5 g Mersolat® H. Unter Rühren werden innerhalb 30 min. 500 g des auf 60 °C erwärmten NCO-Prepolymers aus 17.1 bei einer Innentemperatur von 18-22 °C zugegeben. Das Äquivalentverhältnis zwischen NCO-Gruppen, $OH^{\ominus}$-Gruppen und Butandiol-1,4-OH-Gruppen beträgt 1 : 1.35 : 0.15.

17.3. Herstellung des Polyamins

Die Aufarbeitung erfolgt wie in 2.3 beschrieben. Produktdaten bei Beispiel 18.

### Beispiel 18 (Vergleichsbeispiel)

Beispiel 18 ist insoweit mit Beispiel 17. identisch, daß lediglich ohne Butandiol-1.4 verfahren wird.

| Produktdaten : | Beispiel 17 | Beispiel 18 |
|---|---|---|
| Ausbeute (%) | 98 | 96 |
| NH-Zahl (mg KOH/g) [1]) | 32.5 | 22.2 |
| Säure-Zahl (mg KOH/g) [1]) | 0.05 | 0.5 |
| Mol.-masse [2]) | 6 100 | 7 400 |

| Produktdaten (Fortsetzung) : | Beispiel 17 | Beispiel 18 (Vergleich) |
|---|---|---|
| Viskosität 75 °C (mPa . s) [3]) | 890 | 790 |
| Primärer Stickstoff (%) [4]) | 0.65 | 0.54 |
| Gesamt-Stickstoff (%) [5]) | 1.33 | 1.34 |
| Wassergehalt (%) [7]) | 0.03 | 0.02 |

(Indices siehe Tabelle 1).

Beispiel 19 (erfindungsgemäß) : Funktionalitätserniedrigung

19.1. Herstellung des NCO-Prepolymers

Es findet das NCO-Prepolymer aus Beispiel 17 Verwendung.

19.2. Herstellung der Carbamatmischung

Vorgelegt wird eine Mischung aus 100 ml Wasser und 0,5 g Mersolat® H. Die Reaktanden sind auf zwei Tropftrichter A und B verteilt.

A) enthält 500 g des auf 40 °C temperierten NCO-Prepolymers aus 19.1 (250 mmol NCO)
B) enthält 400 g Wasser, 26.88 g 50 %ige Kalilauge (0.24 mol KOH) und 0,5 g Butandiol-1.4. 6 g n-Propanol (0,1 mol) und ist auf 5-10 °C temperiert.
A und B wurden innerhalb 30 min. so in den auf 20-25 °C temperierten gemeinsamen Reaktionsraum eindosiert, daß pro Zeiteinheit obiges Äquivalentverhältnis in etwa eingehalten wurde.
Nach vollständiger Vereinigung beider Komponenten wird 15 min. bei 20-25 °C nachgerührt.

19.3. Herstellung des Polyamins

Die Aufarbeitung erfolgt wie in 2.3 beschrieben.

Produktdaten :

| | |
|---|---|
| Ausbeute (%) | 94 |
| NH-Zahl (mg KOH/g) | 14.7 |
| Säurezahl (mg KOH/g) | 0.05 |
| Mol.-masse | 6 600 |
| Viskosität 75 °C (mPa.s) | 560 |
| primärer Stickstoff (%) | 0.42 |
| Gesamt-Stickstoff (%) | 1.30 |
| Wassergehalt (%) | 0.34 |

Beispiel 20 (erfindungsgemäß) : Funktionalitätserniedrigung

20.1. Herstellung des NCO-Prepolymers

Es findet das NCO-Prepolymer aus Beispiel 17 Verwendung.

20.2. Herstellung der Carbamat-Mischung

Die Reaktanden sind auf zwei Tropftrichter A und B verteilt, vorgelegt wird eine Mischung aus 100 ml Wasser und 0,5 g Mersolat® H.

A : enthält 500 g des Raumtemperatur aufweisenden NCO-Prepolymers aus 20.1 (250 mmol NCO)
B : enthält 400 g Wasser, 26,7 g 45 %ige Natronlauge (0,3 mol), 200 ml Dioxan, 0,5 g Butandiol-1,4 und 6,7 g Stearylamin (0,025 mol), T : 5-10 °C.

A und B werden innerhalb 30 min. so in den auf 10-15 °C temperierten gemeinsamen Reaktionsraum zu dosiert, daß pro Zeiteinheit obiges Äquivalentverhältnis in etwa konstant bleibt.
Nach vollständiger Vereinigung beider Komponente wird bei 20-25 °C 30 min. nachgerührt.

20.3. Herstellung des Polyamins

Die Aufarbeitung erfolgt so, daß nach dem Abdestillieren der flüchtigen Bestandteile gemäß 2.3. vor dem Absaugen der Kohlensäuresalze erst mit 450 ml Toluol/Ethanol 1 : 1-Gemisch verdünnt und dann erst abgesaugt wird.

Produktdaten :

| | |
|---|---|
| Ausbeute (%) | 91 |
| NH-Zahl (mg KOH/g) | 21.6 |

Produktdaten : (Fortsetzung)

| | |
|---|---|
| Säure-Zahl (mg KOH/g) | 0.09 |
| Mol.-masse [2)] | 7 000 |

| | |
|---|---|
| Viskosität 75 °C (mPa.s) | 810 |
| primärer Stickstoff (%) | 0.56 |
| Gesamt-Stickstoff (%) | 1.38 |
| Wassergehalt (%) | 0.3 |

Beispiel 21 (erfindungsgemäß)

21.1. Herstellung des NCO-Prepolymers

Es findet ein Prepolymer Verwendung, wie es durch Umsetzung eines trifunktionellen Polyetherpolyols (Trimethylolpropan/Propylenoxid) der OH-Zahl 56 mit Isophorondiisocyanat in molarem Überschuß und anschließender destillativer Entfernung des unterschüssigen IPDI's entsteht. Das NCO-Prepolymer hat einen NCO-Wert von 3.7 Gew.-%.

21.2. Herstellung der Carbamatmischung

Vorgelegt werden 100 ml Wasser und 0,5 g Mersolat® H. Die Reaktanden sind auf zwei Tropftrichter A und B verteilt.

A : enthält 600 g des Raumtemperatur aufweisenden NCO-Prepolymers aus 21.1 (0.44 mol NCO)
B : enthält 400 g Wasser, 39.11 g 45 %iger Natronlauge (0,44 mol NaOH) und 17.47 g 4,4'-Diamino-3,3'-dimethyldicyclohexylmethan (0.0 734 mol)

Das Äquivalentverhältnis zwischen NCO-Gruppen, $OH^{\ominus}$-Gruppen und $NH_2$-Gruppen beträgt 1 : 1 : 0.25. B ist auf ca. 5 °C temperiert. A und B werden innerhalb 60 min. so in den auf 5-10 °C temperierten gemeinsamen Reaktionsraum zudosiert, daß pro Zeiteinheit NCO-Komponente (A) und NCO-reaktive Komponente in konstantem Äquivalentverhältnis zueinander zugegeben werden. Nach vollständiger Vereinigung beider Komponenten wird 60 min. bei von 5-10 °C auf ca. 20-23 °C ansteigender Temperatur nachgerührt.

21.3. Herstellung des Polyamins

Die flüchtigen Bestandteile wurden bei 50-60 °C Innentemperatur und 10 mbar zum größten Teil abdestilliert. Danach wird mit 200 ml Toluol versetzt und erneut bei 50-60 °C/10 mbar destilliert. In den verbliebenen zähen, pastenartigen Rückstand wurden 500 ml Ethanol eingerührt und bei 20-25 °C 2 h gerührt. Dann wird filtriert und aus dem Filtrat bei zuerst 10 mbar, später 0,2 mbar, das Ethanol abdestilliert.

Produktdaten :

| | |
|---|---|
| Ausbeute (%) | 86 |
| NH-Zahl (mg KOH/g) [1] | 29 |

Produktdaten : (Fortsetzung)

| | |
|---|---|
| Säure-Zahl (mg KOH/g) [1] | 0.1 |
| Mol.-masse [2] | 7 400 |
| Viskosität 75 °C (mPa.s) | — Paste |
| primärer Stickstoff (%) [4] | 0.72 |
| Gesamt-Stickstoff (%) [5] | 3.02 |

(Indices siehe Tabelle 1.)

**Patentansprüche**

1. Verfahren zur Herstellung von modifizierten, primäre aromatische und/oder aliphatische und/oder cycloaliphatische Aminogruppen aufweisenden Polyaminen mit Urethan- und/oder Harnstoff- und/oder Thiourethangruppen durch basische Hydrolyse von aromatische und/oder aliphatische und/oder cycloaliphatisch gebundene, freie NCO-Gruppen aufweisenden Verbindungen zu Carbamatgruppen aufweisenden Verbindungen und Gewinnung der Polyamine aus dem Carbamatgruppen aufweisende Verbindungen enthaltenden Reaktionsgemisch, dadurch gekennzeichnet, daß man

I) aromatische und/oder aliphatische und/oder cycloaliphatische NCO-Verbindungen aus der Reihe der modifizierten Polyisocyanate erhalten durch teilweise Umwandlung der Isocyanatgruppen in Harnstoff-, Biuret-, Uretdion- oder Isocyanuratgruppen, der NCO-Prepolymeren oder NCO-Semiprepolymeren mit einem Gehalt von 0,5 bis 40 Gew.-% NCO, gegebenenfalls gelöst in einem NCO-inerten Lösungsmittel, durch Vermischen mit

a) im wesentlichen wasserlöslichen Basen aus der Gruppe der Oxide und Hydroxide der I. und II. Hauptgruppe des Periodensystems, der niedermolekularen Alkalisilikate und -aluminate und/oder der quarternären Tetraalkylammoniumhydroxide, in Gegenwart von

b) mindestens einer, zwei oder mehrere an aliphatische, cycloaliphatische oder aromatische Reste gebundene Hydroxy- und/oder Amino- und/oder Thiolgruppen aufweisenden Verbindung und

c) mindestens 1 Mol Wasser pro einem NCO-Äquivalent,

wobei das Verhältnis von Basen a) plus H-aktive Gruppen aus Verbindung b) zu NCO-Gruppen 0,3 : 1 bis 2 : 1 und das Äquivalentverhältnis von Basen a) zu H-aktive Gruppen aufweisenden Verbindungen b) zwischen 1 : 9 bis 9,9 : 0,1 beträgt,

bei Reaktionstemperaturen unter 100 °C in Carbamatgruppen und Urethan- und/oder Harnstoff- und/oder Thiourethangruppen aufweisende Verbindungen überführt und

II) zwecks Gewinnung des modifizierten Polyamins aus der Carbamatgruppen und Urethangruppen und/oder Harnstoff- und/oder Thiourethangruppen aufweisende Verbindungen enthaltenden Reaktionsmischung diese entweder

1. mit einem Protonendonator behandelt und das Polyamin abtrennt und/oder
2. thermisch behandelt und das Polyamin abtrennt und/oder
3. mit einem Lösungsmittel extrahiert.

2. Verfahren nach Anspruch 1, dadurch gekennzeichnet, daß man als NCO-Verbindungen mehrwertige NCO-Prepolymere mit NCO-Gehalten von 1,2 bis 25 Gew.-%, aus Polyisocyanaten und höhermolekularen Polyhydroxylverbindungen mit Molekulargewichten von 400 bis 12 000 aus der Reihe der Polyhydroxy-Polyether, -Polycarbonate, -Polyacetale, -Polythioether, -Polysiloxane oder -Polybutadiene und/oder mehrwertigen, H-aktive Gruppen tragenden Kettenverlängerungsmitteln des Molekulargewichts 18 bis 399, verwendet.

3. Verfahren nach Ansprüchen 1 und 2, dadurch gekennzeichnet, daß man als Basen a) Alkalihydroxide, Erdalkalihydroxide, niedermolekulare Alkali-silikate oder -aluminate und/oder Tetraalkylammoniumhydroxide, gegebenenfalls in Gegenwart weiterer, gegenüber Isocyanat inerter Lösungsmittel, zusammen mit « H-aktive Gruppen » tragenden Verbindungen b) einsetzt.

4. Verfahren nach Ansprüchen 1 bis 3, dadurch gekennzeichnet, daß als Verbindungen b) 2 bis 4 « H-aktive Gruppen » tragende Verbindungen des Molekulargewichts 60 bis 2 000 eingesetzt werden.

5. Verfahren nach Ansprüchen 1 bis 4, dadurch gekennzeichnet, daß man als Verbindungen b) 2 bis 4 primäre OH-Gruppen aufweisende Polyhydroxyverbindungen verwendet.

6. Verfahren nach Ansprüchen 1-5, dadurch gekennzeichnet, daß man neben zwei- und/oder mehrfunktionellen Verbindungen b) monofunktionelle Verbindungen in untergeordneten Mengen mitverwendet.

## Claims

1. Process for the production of modified polyamines containing urethane and/or urea and/or thiourethane groups and primary aromatic and/or aliphatic and/or cycloaliphatic amino groups, by the basic hydrolysis of compounds containing aromatic and/or aliphatic and/or cycloaliphatically bound free NCO groups to form compounds containing carbamate groups and recovery of the polyamines from the reaction mixture containing compounds containing carbamate groups, characterised in that

I) aromatic and/or aliphatic and/or cycloaliphatic NCO compounds from the series comprising the modified polyisocyanates, obtained by partial conversion of the isocyanate groups into urea, biuret, uretdione or isocyanurate groups, NCO prepolymers or NCO semiprepolymers having a content of 0.5 to 40 % by weight of NCO, optionally dissolved in an NCO-inert solvent, are converted into compounds containing carbamate groups and urethane and/or urea and/or thiourethane groups by mixing with

a) substantially water-soluble bases from the group comprising the oxides and hydroxides of main groups I and II of the periodic system, low molecular weight alkali silicates and aluminates and/or quaternary tetraalkylammonium hydroxides, in the presence of

b) at least one compound containing two or more hydroxyl and/or amino and/or thiol groups bonded to aliphatic, cycloaliphatic or aromatic radicals, and

c) at least 1 mol of water per one NCO equivalent,

the ratio of bases a) plus H-active groups from compound b) to NCO groups being 0.3 : 1 to 2 : 1 and the equivalent ratio of bases a) to compounds b) containing H-active groups being between 1 : 9 to 9.9 : 0.1, at reaction temperatures below 100 °C, and

II) to recover the modified polyamine from the reaction mixture containing compounds containing carbamate groups and urethane groups and/or urea and/or thiourethane groups, the reaction mixture is either

1. treated with a proton donor and the polyamine is separated off and/or
2. heat treated and the polyamine is separated off and/or
3. extracted with a solvent.

2. Process according to Claim 1, characterised in that the NCO compounds used are polyvalent NCO prepolymers having NCO contents of 1.2 to 25 % by weight, obtained from polyisocyanates and higher

molecular weight polyhydroxyl compounds having molecular weights of 400 to 12 000, from the series comprising polyhydroxyl polyethers, polycarbonates, polyacetals, polythioethers, polysiloxanes or polybutadienes and/or polyvalent chain-lengthening agents containing H-active groups and having a molecular weight of 18 to 399.

3. Process according to Claims 1 and 2, characterised in that the bases a) used are alkali hydroxides, alkaline earth hydroxides, low molecular weight alkali silicates or aluminates and/or tetraalkylammonium hydroxides, optionally in the presence of other isocyanate-inert solvents, together with compounds b) containing « H-active groups ».

4. Process according to Claims 1 to 3, characterised in that compounds containing 2 to 4 « H-active groups » and having a molecular weight of 60 to 2 000 are used as the compounds b).

5. Process according to Claims 1 to 4, characterised in that polyhydroxyl compounds containing 2 to 4 primary OH groups are used as the compounds b).

6. Process according to Claims 1-5, characterised in that in addition to di- and/or polyfunctional compounds b) monofunctional compounds are also used in minor amounts.

## Revendications

1. Procédé de fabrication de polyamines modifiées présentant des groupes amino primaires aromatiques et/ou aliphatiques et/ou cycloaliphatiques avec groupes uréthane et/ou urée et/ou thiouréthane, par hydrolyse basique de composés présentant des groupes NCO libres liés aromatiquement et/ou aliphatiquement et/ou cycloaliphatiquement pour donner des composés présentant des groupes carbamate, avec récupération des polyamines à partir du mélange de réaction contenant des composés présentant des groupes carbamate, caractérisé en ce que

I) on convertit des composés à NCO aromatiques et/ou aliphatiques et/ou cycloaliphatiques de la série des polyisocyanates modifiés obtenus par conversion partielle des groupes isocyanate en groupes urée, biuret, uretdione ou isocyanurate, des prépolymères à NCO ou des semi-prépolymères à NCO, ayant une teneur de 0,5 à 40 % en poids de NCO, éventuellement en solution dans un solvant organique inerte envers les NCO, par mélange avec

a) des bases essentiellement solubles dans l'eau, du groupe des oxydes et hydroxydes du Ier et IIe groupe principal du système périodique, des silicates et aluminates alcalins à poids moléculaire inférieur et/ou des hydroxydes de tétralcoyl-ammonium quaternaires, en présence

b) d'un composé présentant au moins un, deux ou plusieurs groupes hydroxy et/ou amino et/ou thiol reliés à des radicaux aliphatiques, cycloaliphatiques ou aromatiques et

c) d'au moins 1 mole d'eau par équivalent de NCO,

le rapport des bases a) plus les groupes à H actifs du composé b) envers les groupes NCO étant de 0,3 : 1 à 2 : 1 et le rapport d'équivalence des bases a) envers les composés b) présentant des groupes à H actifs étant de 1 : 9 à 9,9 : 0,1,

à des températures de réaction inférieures à 100 °C, pour obtenir des composés présentant des groupes carbamate et des groupes uréthane et/ou urée et/ou thiouréthane, et en ce que

II) en vue de la récupération de la polyamine modifiée à partir du mélange de réaction contenant des composés présentant des groupes carbamate et uréthane et/ou urée et/ou thiouréthane, soit

1. on traite celui-ci avec un donneur de protons et sépare la polyamine, et/ou
2. on le traite thermiquement et sépare la polyamine, et/ou
3. on l'extrait avec un solvant.

2. Procédé selon la revendication 1, caractérisé en ce qu'on utilise comme composés à NCO des prépolymères à NCO polyvalents ayant des teneurs en NCO de 1,2 à 25 % en poids, obtenus au départ de polyisocyanates et de composés polyhydroxylés à poids moléculaire élevé ayant des poids moléculaires de 400 à 12 000 de la série des polyhydroxypolyéthers, -polycarbonates, -polyacétals, -polythioéthers, -polysiloxanes ou -polybutadiènes et/ou d'agents d'allongement de chaîne polyvalents, portant des groupes à H actifs et d'un poids moléculaire de 18 à 399.

3. Procédé selon les revendications 1 et 2, caractérisé en ce qu'on utilise comme bases a) des hydroxydes alcalins, des hydroxydes alcalinoterreux, des silicates ou aluminates alcalins à poids moléculaire inférieur et/ou des hydroxydes de tétralcoyl-ammonium, éventuellement en présence de solvants supplémentaires inertes envers les isocyanates, conjointement avec des composés b) portant des « groupes à H actifs ».

4. Procédé selon les revendications 1 à 3, caractérisé en ce qu'en tant que composés b) on utilise des composés d'un poids moléculaire de 60 à 2 000 portant 2 à 4 « groupes à H actifs ».

5. Procédé selon les revendications 1 à 4, caractérisé en ce qu'on utilise comme composés b) des composés polyhydroxylés présentant 2 à 4 groupes OH primaires.

6. Procédé selon les revendications 1 à 5, caractérisé en ce qu'à côté des composés b) di- et/ou polyfonctionnels, on utilise conjointement des composés monofonctionnels en quantités mineures.